(19) Europäisches Patentamt
European Patent Office
Office européen des brevets

(11) **EP 3 978 241 B1**

(12) **EUROPEAN PATENT SPECIFICATION**

(45) Date of publication and mention
of the grant of the patent:
**02.07.2025 Bulletin 2025/27**

(21) Application number: **20814003.8**

(22) Date of filing: **27.05.2020**

(51) International Patent Classification (IPC):
**B32B 27/30** *(2006.01)* **B05D 3/06** *(2006.01)*
**B05D 7/24** *(2006.01)* **B32B 27/36** *(2006.01)*
**G09F 9/00** *(2006.01)* **C08J 7/04** *(2020.01)*
**C08J 7/046** *(2020.01)* **B05D 7/04** *(2006.01)*
**B05D 1/26** *(2006.01)* **B05D 3/14** *(2006.01)*
**B29C 48/07** *(2019.01)* **B29K 33/00** *(2006.01)*
**B29K 69/00** *(2006.01)* **B32B 27/28** *(2006.01)*
**B32B 27/08** *(2006.01)* **B29L 31/34** *(2006.01)*
**B29C 48/00** *(2019.01)* **B29L 7/00** *(2006.01)*
**B29L 9/00** *(2006.01)*

(52) Cooperative Patent Classification (CPC):
**B05D 7/04; B29C 48/022; B29C 48/07;**
**B32B 27/08; B32B 27/28; B32B 27/308;**
**B32B 27/365; C08J 7/0427; C08J 7/046;**
B05D 1/265; B05D 3/144; B05D 2201/02;
B05D 2252/02; B05D 2252/10; B05D 2502/005;
(Cont.)

(86) International application number:
**PCT/JP2020/021021**

(87) International publication number:
**WO 2020/241724 (03.12.2020 Gazette 2020/49)**

(54) **LAMINATE, AND METHOD FOR PRODUCING SAME**

LAMINAT UND VERFAHREN ZUR HERSTELLUNG DAVON

STRATIFIÉ ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2019 JP 2019100575**

(43) Date of publication of application:
**06.04.2022 Bulletin 2022/14**

(73) Proprietor: **Kuraray Co., Ltd.**
**Kurashiki-shi, Okayama 710-0801 (JP)**

(72) Inventors:
• **NAKANO, Kirihiro**
**Tsukuba-shi, Ibaraki 305-0841 (JP)**
• **FUNAZAKI, Kazuo**
**Tainai-shi, Niigata 959-2691 (JP)**

• **OZAWA, Yushi**
**Tainai-shi, Niigata 959-2691 (JP)**

(74) Representative: **Müller-Boré & Partner**
**Patentanwälte PartG mbB**
**Friedenheimer Brücke 21**
**80639 München (DE)**

(56) References cited:
**EP-A1- 2 572 879     EP-A1- 3 680 103**
**WO-A1-2016/060100     WO-A1-2018/034315**
**WO-A1-2018/221580     WO-A1-2019/049704**
**JP-A- 2015 128 899**

• **DATABASE WPI Week 200850, Derwent World
Patents Index; AN 2008-H86587, XP002809254**

EP 3 978 241 B1

**(Cont. next page)**

(52) Cooperative Patent Classification (CPC): (Cont.)
B29C 48/21; B29K 2033/12; B29K 2069/00;
B29L 2007/00; B29L 2009/00; B29L 2031/3475;
B32B 2250/24; B32B 2255/10; B32B 2255/26;
B32B 2270/00; B32B 2307/536; B32B 2307/54;
B32B 2307/554; B32B 2307/5825; B32B 2307/732;
B32B 2307/748; C08J 2323/10

**Description**

Technical Field

The present invention relates to a laminate suitable as a protective plate for thermoforming and a method for producing the same.

Background Art

Panel displays such as liquid crystal displays, and touch panel displays in which such panel displays are combined with touch panels (also called touch screens) are used in ATMs of financial institutions such as banks; vending machines; and digital information devices such as mobile phones (including smart phones), portable information terminals (PDAs) such as tablet-type personal computers, digital audio players, portable game machines, copying machines, facsimile machines, and car navigation systems.

A transparent protective plate is provided on a surface of, for example, a panel display such as a liquid crystal display or a touch panel in order to prevent scratches from being formed on the surface. Conventionally, tempered glass has been mainly used as such protective plates. However, the development of transparent resin plates has been in progress in view of their processability and weight-saving.

As a protective plate made of a transparent resin, a resin plate including a polycarbonate layer, which is excellent in impact resistance, and a methacrylic resin layer, which is excellent in luster and scratch resistance, has been studied. Such a resin plate is preferably manufactured by coextrusion molding. In order to improve the functions such as luster, scratch resistance, and impact resistance, a cured film is preferably formed on at least one side of the resin plate. The cured film can serve as a hard-coat layer.

For example, Patent Literature 1 discloses a method for producing a liquid crystal display protective plate by applying a curable coating material to at least one side of a three-layer structured resin plate laminated with a methacrylic resin layer on both sides of a polycarbonate layer, and then curing to form a cured film (claim 1).

Citation List

Patent Literature

Patent Literature 1: Japanese Patent No. 6365583
Patent Literature 2: Japanese Patent No. 6420924
Patent Literature 3: Japanese Patent No. 6488242
Patent Literature 4: Japanese Patent No. 4201365
Patent Literature 5: WO 2019/049 704 A1. Summary of Invention

Technical Problem

In recent years, in applications such as in-vehicle car navigation systems and display audio, displays that are subjected to a shaping process such as a curved-surface forming process have been developed in view of their design and visibility. The protective plates used for such applications are subjected to the shaping process such as a curved-surface forming process through thermoforming such as press forming, vacuum forming, and pneumatic forming, in accordance with the shape of the display. In this shaping process, there is a risk that defects such as cracks or wrinkles occur in the cured film due to heat and stress.

Specifically, when a protective plate in which a cured film is laminated on one side of a resin plate is subjected to curve processing through thermoforming such that the cured film side is the outside and the cured film side is extended, there is a risk that tensile stress is exerted in the outer side of the cured film and cracks occur. When the protective plate in which a cured film is laminated on one side of a resin plate is subjected to curve processing such that the cured film side is the inside and the cured film side is shrunk, there is a risk that compressive stress is exerted to the cured film and wrinkles occur.

In a protective plate in which a cured film is laminated on both sides of a resin plate, there is a risk that cracks occur in the outer side of the cured film to which tensile stress is exerted, and there is a risk that wrinkles occur in the inner side of the cured film to which compressive stress is exserted. In addition, when a protective plate is curved in an S-shape, one cured film may have both a part to which tensile stress is exerted and a part to which compressive stress is exerted.

Patent Literature 1 describes scratch resistance, but does not describe thermoforming after forming a cured film on at least one side of a resin plate, and does not disclose a method for suppressing cracks, wrinkles, or the like that occur in the cured film during the thermoforming process.

Patent Literature 2 aims to suppress cracking, wrinkles, and the like during bending processing (paragraph 0005). This literature discloses a resin laminate including a resin layer including a main layer (A) containing a (meth)acrylic resin and a vinylidene fluoride resin, thermoplastic resin layers (B) laminated on both sides of the main layer (A), and a hard coat layer (corresponding to a cured film) laminated on at least one side of the resin layer, in which the pencil hardness on the hard coat layer side, a limit elongation (%) of a laminate including a polyethylene terephthalate substrate and the hard coat layer, a maximum elongation (%) of a laminate including a polymethyl methacrylate substrate and the hard coat layer, and a film thickness ($\mu$m) of the hard coat layer are optimized (claim 1). In addition, examples of the thermoplastic resin included in the thermoplastic resin layer (B) include a polycarbonate resin (paragraph 0040).

In Patent Literature 2, the "maximum elongation" is the elongation at the breaking point of the resin laminate when the resin laminate is subjected to a tensile test (paragraph 0086). This physical property based on the "breaking point" is not closely related to the suppression of cracks, wrinkles, or the like that occur in the hard-coat layer before the resin laminate breaks during the thermoforming process. Thus, it is difficult to stably and sufficiently suppress cracks, wrinkles, or the like that occur in the hard coat layer during the thermoforming process based on the provisions described in Patent Literature 2.

Patent Literature 3 aims to provide a laminate of a multi-layer film that has no deformation failure when stored in a stacked state, has excellent adhesion to a polarizing layer when processed to a polarizing plate, and is capable of suppressing light unevenness of a liquid crystal display device due to environmental changes when mounted on a liquid crystal display device (paragraph 0010). This literature discloses a laminate of a long multi-layer film including a substrate, a transparent layer containing a curable composition and microspheres (corresponding to a cured film), and having a thickened portion at both ends parallel to the longitudinal direction of the substrate, in which morse hardness of the microspheres, elastic modulus of the transparent layer, adhesion between the substrate and the transparent layer, and the like are optimized (claims 1, 2, and 4). As examples of the materials for the substrate, (meth)acrylic polymers are described (paragraph 0070).

In Patent Literature 3, the elastic modulus of the transparent layer is preferably 0.5 to 3.0 GPa (claim 4). When the transparent layer has such low elastic modulus, it is believed that the occurrence of cracks is suppressed during the thermoforming process. However, the surface hardness of a transparent layer having such a low elastic modulus of 0.5 to 3.0 GPa is low, and the transparent layer is difficult to have good scratch resistance.

Generally, when surface hardness and scratch resistance of a cured film are increased, the occurrence of wrinkles when a compressive stress is exerted during thermoforming can be suppressed, but there is a tendency to crack easily when tensile stress is exerted during thermoforming. When the surface hardness of the cured film is lowered, the occurrence of cracks when tensile stress is exerted during thermoforming can be suppressed, but scratch resistance is reduced, and wrinkles tend to easily occur when compressive stress is exerted during thermoforming. It is difficult to establish compatibility between surface hardness/scratch resistance and thermoformability.

Patent Literature 4 discloses a hard coat film for a touch panel having flexibility, composed of a laminate including a plastic film and a hard coat layer (corresponding to a cured film) applied and cured with a hard coat coating solution containing a reaction curable resin composition provided on one side of the plastic film, in which the pencil hardness of the hard coat is 2H or more, and no cracks occur in a mandrel test of the curvature of 10 mm or more when the thickness of the plastic film is 188 $\mu$m and the hard coat coating solution is applied at a thickness of 4 $\mu$m to form the hard coat layer (claim 1).

Patent Literature 4 relates to a thin, flexible, hard coat film having a hard coat layer formed on the surface of a thin plastic film of preferably 25 to 250 $\mu$m (paragraph 0008). Patent Literature 4 describes that "no cracks occur in a mandrel test of the curvature of 10 mm or more", but does not disclose a method for suppressing cracks, wrinkles, or the like that occur in a hard coat during the thermoforming process.

Patent Literature 5 is also cited.

The present invention has been made in view of the above-described circumstances and an object of the present invention is to provide a laminate having high surface hardness and good scratch resistance, and suppressed cracking of a cured film during thermoforming, and being suitable for a protective plate for thermoforming, and a method for producing the laminate.

Note that although the laminate according to the present invention is suitably used as a protective plate for a panel display such as a liquid crystal display, a touch panel, or the like, it can also be used in any other uses.

Solution to Problem

In order to solve the above problem, the present inventor has intensively studied in detail the physical properties of a cured film capable of achieving both surface hardness/scratch resistance and thermoformability, and has completed the present invention.

The present invention provides a laminate and a method for producing the same as defined in the appended set of claims.

Advantageous Effects of Invention

The present invention provides a laminate having high surface hardness and good scratch resistance, and suppressed cracking of a cured film during thermoforming, and being suitable for a protective plate for thermoforming, and a method for producing the laminate.

Brief Description of Drawings

Fig. 1 is a schematic cross-section of a laminate according to a first embodiment of the present invention.
Fig. 2 is a schematic cross-section of a laminate according to a second embodiment of the present invention.
Fig. 3 is a schematic diagram of an extrusion molding apparatus according to an embodiment of the present invention.

Description of Embodiments

[Laminate]

The laminate according to the present invention includes a thermoplastic resin layer having a monolayer structure or a laminated structure including a (meth)acrylic resin-containing layer, and a cured film laminated on the (meth)acrylic resin-containing layer of the thermoplastic resin layer. The cured film included in the laminate has a pencil hardness of a surface of 2H to 4H, and has a composite elastic modulus and a hardness at 23°C satisfying the following expressions (1) to (3):

$$3.12 \leq X \leq 9.43 \cdots (1)$$

$$0.25 \leq Y \leq 0.56 \cdots (2)$$

$$5.61 \leq X + 10Y \leq 14.9 \cdots (3),$$

wherein X represents the composite elastic modulus (GPa) at 23°C of the cured film, and Y represents the hardness (GPa) at 23°C of the cured film.

Herein, the pencil hardness of the surface of the cured film and the composite elastic modulus and the hardness at 23°C are not measured in the form of a cured film alone, but in the form of a laminate in which the cured film is laminated on a thermoplastic resin layer. These are determined by the method as described in the [Example] section.

Generally, for thin-film moldings, the term "film", "sheet", or "plate" is used depending on the thickness, but there is no clear distinction between these terms. As used herein, the term "thermoplastic resin layer" is a term that encompasses a thermoplastic resin film, a thermoplastic resin sheet, and a thermoplastic resin plate.

The laminate according to the present invention can be subjected to a shaping process such as a curved-surface forming process through known thermoforming such as press forming, vacuum forming, and pneumatic forming. The laminate according to the present invention is suitable as a protective plate or the like which is subjected to a shaping process such as a curved-surface forming process or the like and is used for a panel display such as a liquid crystal display, a touch panel, and the like.

Hereinafter, the (meth)acrylic resin-containing layer is also referred to as "layer A". The thermoplastic resin layer can include any layer B other than the (meth)acrylic resin-containing layer if necessary.

In the application of the protective plate for display, the thermoplastic resin layer preferably includes a polycarbonate resin-containing layer and a (meth)acrylic resin-containing layer. The polycarbonate resin-containing layer is a layer containing a polycarbonate resin (PC), and the (meth)acrylic resin-containing layer is a layer containing a (meth)acrylic resin (PM). The polycarbonate resin (PC) is excellent in impact resistance, and the (meth)acrylic resin (PM) is excellent in luster, transparency, and scratch resistance. Accordingly, the laminate according to the present invention including a thermoplastic resin layer laminated with these resins is excellent in luster, transparency, impact resistance, and scratch resistance.

The layer B other than the (meth)acrylic resin-containing layer can be changed as appropriate depending on the application. Examples of the layer B other than the polycarbonate resin-containing layer include a polyester resin-containing layer.

The laminate according to the present invention has a cured film on the (meth)acrylic resin-containing layer, and thus is excellent in scratch resistance.

Generally, when a laminate having a cured film laminated on one side of a thermoplastic resin layer is subjected to curve processing through thermoforming such that the cured film side is the outside and the cured film side is extended, there is a risk that tensile stress is exerted in the outer side of the cured film and cracks occur.

As used herein, "crack" refers to a state in which a cured film in contact with a (meth)acrylic resin-containing layer is pulled by thermal deformation (thermal stretching) at the time of thermoforming to destruct the material, and the material destruction surface of the cured film can be visually confirmed in the state in which the destruction surface has expanded surpassing the adhesion force between the cured film and the (meth)acrylic resin-containing layer.

To suppress the material destruction of the cured film during thermoforming, a highly extensible, or soft, cured film may be used. However, to increase the pencil hardness, which is an indicator of surface hardness, it is necessary to increase the material strength of at least the surface of the cured film. Generally, when the surface hardness of the cured film is lowered, the occurrence of cracks when tensile stress is exerted during thermoforming can be suppressed, but scratch resistance tends to decrease. The surface hardness and thermoformability are properties that oppose each other.

In the laminate according to the present invention, when the thermoplastic resin layer includes a (meth)acrylic resin-containing layer (layer A) and a layer other than the (meth)acrylic resin-containing layer (layer B), the pencil hardness of the surface of the layer A side of the thermoplastic resin layer changes from the pencil hardness in the case of the layer A used alone, due to the influence of the elastic modulus of the layer B.

In general, at room temperature (e.g., 23°C), a polycarbonate resin has a lower elastic modulus than a (meth)acrylic resin, and thus the pencil hardness of the surface of the thermoplastic resin layer including a polycarbonate resin-containing layer and a (meth)acrylic resin-containing layer tends to be lower than the pencil hardness of the thermoplastic resin layer composed of the (meth)acrylic resin-containing layer alone. In this case, it is more difficult to achieve both surface hardness and thermoformability (crack suppression during thermoforming).

When two parameters of the composite elastic modulus and the hardness of the cured film included in the laminate satisfy the above expressions (1) to (3), both the surface hardness and the thermoformability, which are properties opposite to each other, can be achieved, and a laminate that has high surface hardness and good scratch resistance, and suppresses cracking in the cured film during thermoforming, and is suitable for a protective plate for thermoforming can be provided.

The pencil hardness of the surface of the cured film included in the laminate (hereinafter, also simply referred to as "pencil hardness of the cured film")) is preferably higher in view of improving the scratch resistance and the durability of the laminate. The cured film according to the present invention has a pencil hardness of a surface of 2H to 4H. Preferably, the pencil hardness is 3H or more. The pencil hardness of the cured film is preferably lower in view of crack suppression during thermoforming, and thus it is 4H or less. As the pencil hardness of the cured film is in the range of 2H to 4H, both the scratch resistance of the laminate and the crack suppression of the cured film during thermoforming can be achieved.

Herein, the "composite elastic modulus" and "hardness" of the cured film are measured by the nanoindentation method in accordance with the method described in the [Example] section. In the measurement mechanism, the hardness in the nanoindentation measurement is determined from the stress at the maximum strain amount of the cured film, and the composite elastic modulus is determined from the stress at the time of pulling off a probe after pressed it into the film. In the nanoindentation method, the physical property values of the cured film alone can be extracted. For example, a material having low composite elastic modulus, even having high hardness, has quick relaxation in the cured film and has a small elastic recovery amount and a long recovery time, thus the material can be said to have good thermoformability.

The cured film is composed of a crosslinked cured product of a curable composition. Considering the composition and crosslinked structure, it may be believed that the higher the hardness, the higher the composite elastic modulus. However, there is not necessarily a clear correlation between these physical properties. By performing nanoindentation measurements to determine the composite elastic modulus and the hardness of the cured film and adjusting these two parameters, optimization of the composition and the cross-linked structure of the cured product can be achieved.

From the experimental results obtained in the [Example] section, both the pencil hardness 2H to 4H of the cured film and the bending radius R without cracking of 10 to 75 mm during thermoforming can be achieved when the cured film satisfies the following expressions (1) to (3).

$$3.12 \leq X \leq 9.43 \cdots (1)$$

$$0.25 \leq Y \leq 0.56 \cdots (2)$$

$$5.61 \leq X + 10Y \leq 14.9 \cdots (3),$$

wherein X represents the composite elastic modulus (GPa) at 23°C of the cured film, and Y represents the hardness (GPa) at 23°C of the cured film.

As the composite elastic modulus X is higher, the pencil hardness of the laminate may be increased, but the bending radius R with cracking may be greater. As the hardness Y is lower, the bending radius R with cracking may be smaller, but the composite elastic modulus X may be reduced.

When the composite elastic modulus X satisfying expression (1), the hardness Y satisfying expression (2), and the composite elastic modulus X and the hardness Y satisfying expression (3), both the pencil hardness of the laminate and the crack suppression effect during thermoforming can be effectively achieved.

Note that, in the "bending radius R without cracking", a smaller bending radius R means a higher crack-suppression effect during thermoforming. For the evaluation method of the bending radius R, see the [Example] section.

It is preferred that the adhesion of the cured film to the (meth)acrylic resin-containing layer is higher since cracking is less likely to occur during thermoforming. As used herein, the "adhesion of the cured film" is determined in accordance with the method described in the [Example] section.

When the adhesion of the cured film to the thermoplastic resin layer is tested in accordance with the cross-cut method of JIS-K5600-5-6 (provided that the number of cut lines in each direction of the lattice pattern is 11 and a test compartment of 100 blocks is formed), it is preferred that no peeling is observed in 88 blocks or more of the test compartment of 100 blocks formed in the cured film, more preferably no peeling is observed in 98 blocks or more, and most preferably no peeling is observed in all 100 blocks.

As used herein, the "breaking elongation of cured film" is the elongation at which only a cured film is broken when a laminate including a thermoplastic resin layer including a (meth)acrylic resin-containing layer and the cured film is thermally stretched. Herein, it is assumed that the breaking elongation of the cured film is less than that of the thermoplastic resin layer. The "breaking elongation of cured film" is determined in accordance with the method described in the [Example] section.

The breaking elongation of the cured film is preferably higher, but as the breaking elongation is higher, the pencil hardness tends to be lower. The breaking elongation of the cured film is preferably 103 to 123%, more preferably 108 to 123%.

The adhesion of the cured film depends on the combination of the composition and cross-linked structure of the cured film with the composition of the (meth)acrylic resin-containing layer in contact with the cured film.

In order to increase the adhesion of the cured film, generally, the composition and crosslinked structure of the cured film may be adjusted, or the composition of the (meth)acrylic resin-containing layer in contact with the cured film may be adjusted.

For example, an aspect in which the (meth)acrylic resin-containing layer contains 1 to 90% by mass of a methacrylic resin (MK) having a triad syndiotacticity (rr) of 65% or more, and an aspect in which the (meth)acrylic resin-containing layer contains 5 to 80% by mass of a methacrylic resin and 95 to 20% by mass of a copolymer containing an aromatic vinyl compound unit and a maleic anhydride unit may be used since the adhesion of the cured film can be increased. According to the present invention, the aspect in which the (meth)acrylic resin-containing layer contains 5 to 80% by mass of a methacrylic resin and 95 to 20% by mass of a copolymer containing an aromatic vinyl compound unit and a maleic anhydride unit is used.

When the layer B is a polyester resin-containing layer, the breaking elongation of the cured film can be preferably improved, but the pencil hardness of the cured film may be reduced.

For the purpose of improving the adhesion of the cured film, the surface of the layer A may be subjected to a surface treatment such as a surface irregularity treatment such as a primer treatment, a sandblasting treatment, or a solvent treatment; a surface oxidation treatment such as a corona discharge treatment, a chromic acid treatment, an ozone irradiation treatment, and an ultraviolet irradiation treatment; or the like before the cured film is formed.

Hereinafter described are preferred materials and configurations in the laminate according to the present invention for achieving both surface hardness and thermoformability which are properties opposite to each other.

(Cured Film)

Examples of the cured film include a scratch-resistant (hard coat) cured film and a low-reflective cured film. The laminate according to the present invention includes at least a scratch-resistant (hard-coat) cured film as a functional layer, and may include other functional layers such as a low-reflective cured film in contact with the scratch-resistant (hard-coat) cured film if necessary.

As used herein, unless otherwise specified, the term "cured film" means a scratch-resistant (hard-coat) cured film.

The thickness of the scratch-resistant (hard-coat) cured film is 10 to 20 μm, in view of surface hardness and crack suppression during thermoforming. When the thickness of the cured film is 2.6 μm or less, the surface hardness may be insufficient. When the thickness of the cured film exceeds 30 μm, cracks may occur during thermoforming.

<Scratch-Resistant (Hard Coat) Cured Film >

The laminate according to the present invention includes at least a scratch-resistant (hard-coat) cured film as a functional layer. The cured film includes a cured product of a curable composition.

The curable composition is limited as described later and allows the cured film satisfying the above expressions (1) to (3) be formed, and can contain curable compounds, polymerization initiators, and various additives as necessary and as described later in detail. When the cured film is laminated on both sides of the thermoplastic resin layer, the curable compositions composing the cured film may be the same or different.

By adjusting the type and content of the curable compound in the curable composition, the type and content of the additive in the curable composition, the curing conditions, the thickness of the cured film, and the like, the cured film can be adjusted to satisfy the above expressions (1) to (3).

Examples of the type of the curable composition include a photo-curable composition, a thermoset composition, and a moisture-curable composition. Among them, the photocurable composition is preferred since it can increase the hardness of the surface and the vicinity of the cured film.

The curable composition can be prepared, for example, by combining a main curable agent and a polymerization initiator as essentials, and further adding a monofunctional (meth)acrylic acid ester having a hydroxyl group, a polyhydric alcohol, an isocyanate, a monofunctional acrylate having no hydroxyl group, and the like if necessary.

It is preferred that the main curable agent is a curable (meth)acrylate. Specific examples of the main curable agent include a polyfunctional (meth)acrylate, a polyfunctional urethane (meth)acrylate, a polyfunctional epoxy (meth)acrylate, a polyfunctional carboxy group-modified epoxy (meth)acrylate, a polyfunctional epoxy group-modified epoxy (meth)acrylate, a polyfunctional polyester (meth)acrylate, and a polyfunctional siloxane-modified (meth)acrylate.

Other examples of the main curable agent include a polyfunctional cycloaliphatic epoxy resin, a polyfunctional glycidyl ether epoxy resin, a polyfunctional vinyl ether, a polyfunctional oxetane, and a polyfunctional alkoxysilane.

The main curable agent may be used singly or in combination of two or more thereof. By appropriately selecting the main curable agent, physical properties such as hardness, flexibility, composite elastic modulus, and breaking elongation of the cured film can be adjusted. According to the present invention, a curable composition containing one or more curable (meth)acrylates selected from a group of polyfunctional (meth)acrylates and polyfunctional urethane (meth) acrylates is used for the cured product of the cured film.

Among the above, the polyfunctional (meth)acrylate is preferred because it has a relatively fast curing speed and tends to increase the crosslinking density, and the cured product tends to have high hardness.

Polyfunctional urethane (meth)acrylate is particularly preferred. The cured product of the polyfunctional urethane (meth)acrylate has a relatively high hardness and can have moderate flexibility (elongation) as it includes the backbone formed by reaction of the isocyanate with the hydroxyl group-containing (meth)acrylate monomer. It is preferable to use one or more polyfunctional urethane (meth)acrylates since a cured film can have better surface hardness and better thermal stretchability.

By using at least one or more type of monomers and/or oligomers as the curable (meth)acrylate, the surface hardness of the cured film can be improved. The breaking elongation of the cured film can be adjusted by adjusting the molecular weight of the curable (meth)acrylate used.

For example, when the curable (meth)acrylate has two (meth)acryloyl groups, it is preferred that the number-average molecular weight (Mn) of the curable (meth)acrylate is higher since the breaking elongation of the cured film tends to be higher. A curable (meth)acrylate having a suitable molecular weight can be obtained, for example, by suitably selecting the molecular weight of a polyester, a polyurethane, a polycarbonate, a polycaprolactone, a hydrogenated polybutadiene, or the like having a hydroxyl group or a carboxy group at the end, and reacting the selected compound with an isocyanate and a hydroxyl group-containing (meth)acrylate.

Examples of the curable (meth)acrylate monomer include trimethylolpropane tri(meth)acrylate, trimethylolpropane tetra(meth)acrylate, tris(acryloxyethyl) isocyanurate, caprolactone-modified tris(acryloxyethyl)isocyanurate, pentaerythritol tri(meth)acrylate, pentaerythritol tetra(meth)acrylate, dipentaerythritol hexa(meth)acrylate, alkyl-modified dipentaerythritol tri(meth)acrylate, alkyl-modified dipentaerythritol tetra(meth)acrylate, alkyl-modified dipentaerythritol penta(meth)acrylate, and caprolactone-modified dipentaerythritol hexa(meth)acrylate.

Examples of the curable (meth)acrylate oligomer include a polyfunctional urethane acrylate, an epoxy acrylate, a polyester acrylate, a polyether acrylate, and an acrylic acrylate.

Among them, dipentaerythritol hexa(meth)acrylate, dipentaerythritol penta(meth)acrylate, and the like are preferred in view of wear resistance and curing speed.

Examples of the commercially available products of the curable (meth)acrylate include SHIKOH UV-3000B and

EP 3 978 241 B1

SHIKOH UV-3200B(trade name, by Nippon Synthetic Chemical Industry Co., Ltd.), UN-7600 (trade name, by Negami Chemical Industrial Co., Ltd.), and RX8-3-6 and RX43-21 (trade name, by Asia Industry Co., Ltd.).

The polyfunctional urethane (meth)acrylate is obtained, for example, by reacting a mono- or polyfunctional hydroxyl group-containing (meth)acrylate monomer, a polyhydric alcohol, and a mono- or polyfunctional isocyanate monomer or an organic polyisocyanate. Examples of commercially available products of such polyfunctional urethane (meth)acrylates include Art Resin "UN-952" and "UN-954" (trade name) manufactured by Negami Kogyo Co., Ltd.

It is preferred that a multifunctional acrylate having three or more (meth)acryloyl groups and a hydroxyl group is used as the curable (meth)acrylate, since a cured film having a high surface hardness is obtained after curing.

Furthermore, it is preferred that the curable (meth)acrylate with relatively high molecular weight is used, since the breaking elongation of the cured film is increased and a cured film having good thermoformability is obtained.

The siloxane-modified (meth)acrylate is a compound in which a (meth)acrylic compound is linked with a compound having a siloxane bond (-Si-O-Si-). By using the siloxane-modified (meth)acrylate of such a configuration, the surface hardness of the cured film can be effectively increased and the excellent oil repellency by the siloxane bond can be imparted to the cured film.

The monofunctional (meth)acrylic acid ester having a hydroxyl group can be used to dilute a highly viscous main curable agent while simultaneously increasing curing reactivity and also to improve the hydrophilicity of the cured film and prevent turbidity. Examples include 2-hydroxyethyl (meth)acrylate, 2-hydroxypropyl (meth)acrylate, 3-hydroxypropyl (meth)acrylate, 4-hydroxybutyl (meth)acrylate, 1,4-cyclohexanedimethanol monoacrylate, and 4-hydroxycyclohexyl (meth)acrylate.

Examples of the polyhydric alcohol include (meth)acrylic polyols, polyester polyols, polycarbonate polyols, polyethylene glycols, and polypropylene glycols.

As the isocyanate, linear or cyclic aliphatic isocyanates are preferred. Aromatic isocyanates can also be used. However, when an aromatic isocyanate is used, while it can easily obtain an excellent hard coat property in terms of hardness and scratch resistance, the light resistance is reduced, and the cured film tends to be easily yellowed due to exposure to light.

Examples of the linear or cyclic aliphatic diisocyanate include hexamethylene diisocyanate, isophorone diisocyanate, dicyclohexylmethane diisocyanate, hydrogenated tolylene diisocyanate, and hydrogenated xylylene diisocyanate.

The monofunctional acrylate having no hydroxyl group can be used for the purpose of reducing viscosity and improving curability of the curable composition, reducing or improving the surface hardness and elastic modulus of the cured product, or the like. Examples include those having an alkyl chain or an aromatic and/or cycloaliphatic ring structure in the ester moiety.

The monofunctional acrylate having an alkyl chain is a monofunctional acrylic acid ester monomer having an alkyl group with 2 to 14 carbon atoms at the ester moiety, and is a component capable of adjusting the viscosity of the curable composition while maintaining the transparency of the cured product. The monofunctional acrylate having an alkyl chain can reduce the cohesion and decrease the elastic modulus of the cured film depending on the amount added to the curable composition. Examples of monofunctional acrylate having an alkyl chain include butyl acrylate, 2-ethylhexyl acrylate, and lauryl acrylate.

The monofunctional acrylate having an aromatic ring is an acrylate having an aromatic ring in the ester moiety, and can increase the elastic modulus by its cohesion. Examples of the monofunctional acrylate having an aromatic ring include benzyl acrylate, phenoxyethyl acrylate, ethoxylated ortho-phenylphenol acrylate, phenoxy polyethylene glycol acrylate, phenoxy-polyethylene glycol acrylate, nonylphenol EO adduct acrylate, phenoxy diethylene glycol acrylate, 2-hydroxy-3-phenoxypropyl acrylate, 2-acryloyloxyethyl-phthalic acid, 2-acryloyloxyethyl-2-hydroxyethyl-phthalic acid, and neopentyl glycol-acrylic acid-benzoic acid ester.

The monofunctional acrylate having a bulky functional group has, in the ester moiety, a dicyclopentanyl group, a dicyclopentenyl group, an isobornyl group, an adamantanyl group, a tetrahydrofuranyl group, a cyclohexanyl group, or the like. Examples include dicyclopentenyl acrylate, dicyclopentenyloxyethyl acrylate, dicyclopentanyl acrylate, isobornyl acrylate, adamantanyl acrylate, tetrahydrofuryl acrylate, and cyclohexyl acrylate. A cured product with high surface hardness can be obtained from the robust backbone of the monofunctional acrylate. Examples include isobornyl acrylate, dicyclopentanyl (meth)acrylate, dicyclopentenyl (meth)acrylate, dicyclopentenyloxyethyl (meth)acrylate, adamantanyl (meth)acrylate, and tetrahydrofuryl (meth)acrylate.

The polymerization initiator may be any one that produces a radical that triggers the polymerization reaction by irradiation with active energy rays such as ultraviolet rays and electron rays, and a versatile photopolymerization initiator is preferred. Examples include benzoin ethers such as benzoin-normal butyl ether and benzoin isobutyl ether; benzyl ketals such as benzyl dimethyl ketal and benzyl diethyl ketal; acetophenones such as 2,2-dimethoxyacetophenone and 2,2-diethoxyacetophenone; $\alpha$-hydroxyalkylphenones such as 1-hydroxycyclohexyl phenyl ketones, oligo [2-hydroxy-2-methyl-1-(4-ethylenephenyl)propan-1-one], 2-hydroxy-2-methyl-1-phenylpropan-1-one, 1-[4-(2-hydroxyethoxy)phenyl]-2-hydroxy-2-methyl-1-propan-1-one, and 2-hydroxy-2-methyl-1-(4-isopropylphenyl)propan-1-one; $\alpha$-aminoalkyl

9

phenones such as 2-methyl-1-[4-(methylthio)phenyl]-1-morpholinopropane and 2-benzyl-2-dimethylamino-1-(4-morpholinophenyl)-1-butanone; monoacylphosphine oxides such as 2,4,6-trimethylbenzoyldiphenylphosphine oxide and 2,4,6-trimethylbenzoylphenylethoxyphosphine oxide; monoacylphosphine oxides such as bis(2,6-dimethoxybenzoyl)-2,4,4-trimethylpentylphosphine oxide and bis(2,4,6-trimethylbenzoyl)phenylphosphine oxide. These can be used singly or in combination of two or more thereof.

The amount of the polymerization initiator is not particularly limited, but is preferably 0.05 to 10% by mass, more preferably 0.1 to 5% by mass based on the radically polymerizable components.

Ultraviolet light having high energy is preferably used for curing the curable composition. An ultraviolet polymerization initiator having a maximum absorption wavelength of 220 to 260 nm and an ultraviolet polymerization initiator having a maximum absorption wavelength of 300 to 380 nm may be used in combination to efficiently polymerize the curable composition.

The curable composition can contain various additives if necessary. Examples of the additive include a curing catalyst, a filler, an antioxidant, a chain transfer agent, a polymerization accelerator, a sensitizer, a sensitization promoter, a stabilizer such as a light stabilizer, a tackifier, a flow modifier, a plasticizer, an antifoam agent, a leveling agent, an antistatic agent, an ultraviolet absorber, an ion trap agent, a colorant, and a solvent.

Examples of the filler include organic or inorganic particles. The inorganic particles are preferred in view of being present on and near the surface of the cured film, improving the slipperiness of the surface of the cured film, suppressing the destruction of the cured film and improving scratch resistance (surface hardness), increasing haze due to the difference in refractive index between the particles and cured products of the curable compound, reducing the reflectivity, and suppressing glare on the front surface of the display.

Examples of the inorganic particles include particles of metal oxide such as silica, titania, zirconia, alumina, zinc oxide, germanium oxide, indium oxide, tin oxide, indium tin oxide (ITO), antimony oxide, and cerium oxide; and particles of metal fluoride such as magnesium fluoride and sodium fluoride. Among them, silica, titania, zirconia, and alumina are preferred. The inorganic particles may have, on the surface of the particles, a surface-modifying group to make the inorganic particles moderately interact with the curable compound to disperse well, or a surface-modifying group to make the inorganic particles react with the curable compound to bind firmly.

The particle size of the filler and the amount of the filler added are not particularly limited. In the cured film, it is preferred to contain a large amount of filler in view of improving surface hardness, while it is better to keep the filler in a small amount in order to maintain the transmittance and prevent glare. Furthermore, in tensile stretching during thermoforming, a crack may be formed originating from a filler. Thus, in view of crack suppression during thermoforming, the amount of filler added is preferably small, and the particle size of the filler is preferably small.

The amount of the filler added is preferably 100 parts by mass or less, more preferably 50 parts by mass or less, especially preferably 30 parts by mass or less based on 100 parts by mass of the curable compound. When the amount of filler added exceeds the above upper limit, cracks originating from the filler are likely to occur, and the bending radius R without cracking during thermoforming may be increased.

The average particle size (D50) of the filler is preferably 3 $\mu$m or less, more preferably 1 $\mu$m or less, especially preferably 0.5 $\mu$m or less.

For the purpose of antifouling property and/or fingerprint resistance, a fluorine-containing compound having a polymerizable group may be added to the curable composition.

The curable composition preferably contains a solvent for the purpose of adjusting its viscosity or the like. Examples of the solvent include, but are not particularly limited to, toluene, butyl acetate, isobutanol, ethyl acetate, cyclohexane, cyclohexanone, methylcyclohexanone, hexane, acetone, methylethyl ketone, methyl isobutyl ketone, and propylene glycol monomethyl ether. These solvents can be used singly or in combination of two or more thereof. The solids content of the curable composition is preferably adjusted to 0.1 to 50 vol%.

As the curable composition, a commercially available product may be used. Examples of the commercially available product include AICAAITRON (registered trademark) "Z-850-3" manufactured by Aica Kogyo Co., Ltd..; and Tomax (registered trademark) "NXD-002AP", "NXD-004AP", and "FA-3371" manufactured by NIPPON KAKO TORYO CO., LTD. The commercially available products may be used singly, or a plurality of commercially available products may be mixed, or one or two or more commercially available products may be mixed with some of the materials of the curable composition so that the cured film satisfies the above expressions (1) to (3).

By adjusting the composition of the curable composition, physical properties such as hardness, flexibility, composite elastic modulus, and breaking elongation of the cured film can be adjusted, and both surface hardness/scratch resistance and thermoformability of the laminate can be achieved.

<Low-reflective cured film (low-reflective layer)>

Any known low-reflective cured film (low-reflective layer) can be used as a low-reflective cured film which is used in combination if necessary. The ductility of the low-reflective cured film is lower than that of the scratch-resistant (hard-coat) cured film. The thickness of the low-reflective cured film may be within a general range, preferably 50 to 200 nm, more preferably 100 to 150 nm. If the cured film is too thin or too thick, its low reflection performance may become unsatisfactory.

Irregularities may be imparted to the surface of the low-reflective cured film to reduce the reflectivity and prevent glare. The imparting of irregularities can be performed by known methods, and examples of the methods include a method for adding particles into a film, a method for transferring a shape of fine irregularities to the surface of the film using a die having the irregularities.

To the low-reflective cured film, a fluorine-containing compound having a polymerizable group may be added for the purpose of antifouling property and/or fingerprint resistance.

The formation of the low-reflective cured film can be performed by a known method, and the low-reflective cured film may be formed by applying or by affixing a transfer film.

((Meth)acrylic Resin-Containing Layer)

The thermoplastic resin layer having a monolayer structure or a laminated structure included in the laminate according to the present invention includes a (meth)acrylic resin-containing layer. The (meth)acrylic resin-containing layer contains one or more (meth)acrylic resins (PM). The (meth)acrylic resin is a methacrylic resin which is a homopolymer or a copolymer containing a structural unit derived from one or more (meth)acrylic acid hydrocarbon esters (hereinafter, also simply referred to as (meth)acrylic acid ester).

The (meth)acrylic resin is preferably a homopolymer or a copolymer containing a structural unit derived from one or more methacrylic acid hydrocarbon esters (hereinafter, also simply referred to as methacrylic acid ester) including methyl methacrylate (MMA).

A hydrocarbon group in the methacrylic acid ester may be an acyclic aliphatic hydrocarbon group such as a methyl group, an ethyl group, and a propyl group, or an alicyclic hydrocarbon group, or an aromatic hydrocarbon group such as a phenyl group.

In view of transparency, the amount of a methacrylic acid ester monomer unit contained in the methacrylic resin is preferably 50% by mass or more, more preferably 80% by mass or more, and particularly preferably 90% by mass or more, or may be 100% by mass.

The methacrylic resin may contain a structural unit derived from one or more monomers other than the methacrylic acid ester. Examples of the other monomer(s) include acrylic acid esters such as methyl acrylate (MA), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. Among them, in view of availability, MA, ethyl acrylate, n-propyl acrylate, isopropyl acrylate, n-butyl acrylate, isobutyl acrylate, and tert-butyl acrylate are preferred. MA and ethyl acrylate are more preferred. Furthermore, MA is particularly preferred. The content of the structural unit derived from the other monomer(s) in the methacrylic resin is preferably 10% by mass or less, more preferably 5% by mass or less, and particularly preferably 2% by mass or less.

The methacrylic resin is preferably obtained by polymerizing one or more methacrylic acid esters including MMA and other monomer(s) if necessary. When a plurality of monomers is used, the polymerization is usually performed after preparing a monomer mixture by mixing the plurality of monomers. The polymerization method is not limited to any particular methods. In view of productivity, a radical polymerization method such as a bulk polymerization method, a suspension polymerization method, a solution polymerization method, or an emulsion polymerization method is preferred.

The weight average molecular weight (Mw) of the methacrylic resin is preferably 40,000 to 500,000. When the molecular weight Mw is 40,000 or more, the (meth)acrylic resin-containing layer has excellent scratch resistance and excellent heat resistance. Furthermore, when the molecular weight Mw is 500,000 or less, the (meth)acrylic resin-containing layer has excellent moldability.

As used herein, "Mw" is a standard polystyrene equivalent molecular weight measured by gel permeation chromatography (GPC) unless otherwise specified. The same holds for the number average molecular weight (Mn).

As used herein, the glass transition temperature of the (meth)acrylic resin-containing layer is represented by TgA. TgA is preferably 115 to 135°C and more preferably 120 to 130°C in order to prevent a defect in external appearance such as surface roughness and cracking during thermoforming such as a curved-surface forming process. If TgA is too low and hence the thermoforming temperature is too high relative to TgA, surface roughness may occur in the (meth)acrylic resin-containing layer during the thermoforming. If TgA is too high and hence the thermoforming temperature is too low relative to TgA, a defect in external appearance such as cracking may occur in the (meth)acrylic resin-containing layer.

Note that the (meth)acrylic resin-containing layer may be a layer composed of only one or more (meth)acrylic resins, or may be a layer including one or more (meth)acrylic resins and one or more other components. The glass transition temperature of the (meth)acrylic resin is preferably 115 to 135°C and more preferably 120 to 130°C. However, in the case where the (meth)acrylic resin-containing layer contains a plurality of components, as long as TgA of the whole layer is within the range of 115 to 135°C, the (meth)acrylic resin-containing layer may contain a component having a glass transition temperature outside the range of 115 to 135°C.

<Methacrylic Resin (MK)>

A first aspect, which is not according to the present invention, that can enhance the adhesion of the cured film to the (meth)acrylic resin-containing layer includes an aspect in which the (meth)acrylic resin-containing layer contains a methacrylic resin (MK) having a triad syndiotacticity (rr) of 65% or more.

The triad syndiotacticity (rr) is a ratio representing both three adjacent structural units (triad) and two adjacent structural units (diad) in the triad are racemo (designated as rr). Note that, in the adjacent structural units (diad) in a polymer molecule, one consisting of structural units having the same configuration is referred to as meso, and one consisting of structural units having opposite configurations is referred to as racemo, and they are denoted as m and r, respectively. As used herein, unless otherwise specified, triad syndiotacticity (rr) is a value obtained by measuring the $^1$H-NMR spectrum at 30°C in deuterated chloroform, determining the area (X) of the region of 0.6 to 0.95 ppm and the area (Y) of the region of 0.6 to 1.35 ppm when the TMS is set to 0 ppm from the spectrum, and calculating a value by the expression: $(X/Y) \times 100$.

The methacrylic resin (MK) has an rr ratio of 65% or more, preferably 70 to 90%, and more preferably 72 to 85%. When the rr ratio is 65% or more, the $\alpha$ relaxation temperature (T$\alpha$) is significantly increased, and the surface hardness of the laminate including the (meth)acrylic resin-containing layer containing the methacrylic resin is significantly increased. Furthermore, the adhesion of the cured film to the (meth)acrylic resin-containing layer is improved.

The (meth)acrylic resin-containing layer may contain another methacrylic resin in addition to the methacrylic resin (MK) for the purpose of adjusting the viscosity of the resin and imparting toughness to the (meth)acrylic resin-containing layer.

The amount of methacrylic resin (MK) contained in the (meth)acrylic resin-containing layer is preferably 1 to 90% by mass, and more preferably 33 to 66% by mass.

The molecular weight distribution (weight average molecular weight (Mw)/number average molecular weight (Mn)) of the methacrylic resin (MK) is not particularly limited, and is preferably 1.0 to 1.8, more preferably 1.0 to 1.4, and particularly preferably 1.03 to 1.3. When a methacrylic resin (MK) having a molecular weight distribution (Mw/Mn) within such a range is used, the (meth)acrylic resin-containing layer has excellent mechanical strength. Mw and Mw/Mn can be controlled by adjusting the type and/or amount of a polymerization initiator used during manufacturing.

<Methacrylic Resin Composition (MR)>

The (meth)acrylic resin-containing layer contains a (meth)acrylic resin and one or more other polymers.

A second aspect, which is according to the present invention, that can enhance the adhesion of the cured film to the (meth)acrylic resin-containing layer includes an aspect in which the (meth)acrylic resin-containing layer is composed of a methacrylic resin composition (MR) (hereinafter, also simply referred to as a resin composition (MR)) containing a methacrylic resin (PM) and an SMA resin (SM).

As used herein, the "SMA resin" is a copolymer that contains a structural unit derived from one or more types of an aromatic vinyl compound and a structural unit derived from one or more types of an acid anhydride including maleic anhydride (MAH), and more preferably contains a structural unit derived from a methacrylic acid ester.

The methacrylic resin composition (MR) contains 5 to 80% by mass of a methacrylic resin (PM) and 95 to 20% by mass of an SMA resin (SM). An aspect in which the (meth)acrylic resin-containing layer is composed of a methacrylic resin composition (MR) of such a composition is preferred since the adhesion of the cured film to the (meth)acrylic resin-containing layer can be increased.

In order to adjust TgA to 120°C or higher, or the like, the amount of the methacrylic resin (PM) contained in the resin composition (MR) is preferably 5 to 80% by mass, more preferably 5 to 55% by mass, and particularly preferably 10 to 50% by mass.

The SMA resin (SM) is a copolymer containing a structural unit derived from one or more types of an aromatic vinyl compound and one or more types of an acid anhydride containing MAH.

Examples of the aromatic vinyl compound include styrene (St); nucleus alkyl-substituted styrene such as 2-methylstyrene, 3-methylstyrene, 4-methylstyrene, 4-ethylstyrene, and 4-tert-butylstyrene; and $\alpha$-alkyl-substituted styrene such as $\alpha$-methylstyrene and 4-methyl-$\alpha$-methylstyrene. Among them, styrene (St) is preferred in view of availability. In view of transparency and moisture resistance of the resin composition (MR), the amount of the aromatic vinyl compound monomer unit contained in the SMA resin (SM) is preferably 50 to 85% by mass, more preferably 55 to 82% by mass, and particularly preferably 60 to 80% by mass.

As the acid anhydride, at least maleic anhydride (MAH) may be used in view of availability, and other acid anhydride(s) such as citraconic anhydride or dimethyl maleic anhydride may be used if necessary. In view of transparency and heat resistance of the resin composition (MR), the amount of the acid anhydride monomer unit contained in the SMA resin (SM) is preferably 15 to 50% by mass, more preferably 18 to 45% by mass, and particularly preferably 20 to 40% by mass.

The SMA resin (SM) may contain a structural unit derived from one or more types of a methacrylic acid ester monomer in addition to the aromatic vinyl compound and the acid anhydride. Examples of the methacrylic acid ester include MMA, ethyl methacrylate, propyl methacrylate, isopropyl methacrylate, n-butyl methacrylate, propyl methacrylate, isopropyl methacrylate, n-butyl methacrylate, isobutyl methacrylate, t-butyl methacrylate, 2-ethylhexyl methacrylate, cyclohexyl methacrylate, phenyl methacrylate, benzyl methacrylate, and 1-phenylethyl methacrylate. Among them, a methacrylic acid alkyl ester of which the alkyl group has 1 to 7 carbon atoms is preferred. **In** view of heat resistance and transparency of the SMA resin (SM), MMA is particularly preferred. **In** view of bending processability and transparency of the thermoplastic resin layer, the amount of the methacrylic acid ester monomer unit contained in the SMA resin (SM) is preferably 1 to 35% by mass, more preferably 3 to 30% by mass, and particularly preferably 5 to 26% by mass. **In** such cases, the amount of the aromatic vinyl compound monomer unit contained is preferably 50 to 84% by mass, and the amount of the acid anhydride monomer unit contained is preferably 15 to 49% by mass.

The SMA resin (SM) may have a structural unit derived from a monomer other than the aromatic vinyl compound, the acid anhydride, and the methacrylic acid ester. As the other monomer(s), those described above in the description of the methacrylic resin (PM) may be used. The amount of the other monomer unit(s) contained in the SMA resin (SM) is preferably 10% by mass or less, more preferably 5% by mass or less, and particularly preferably 2% by mass or less.

The SMA resin (SM) is obtained by polymerizing the aromatic vinyl compound, the acid anhydride, the methacrylic acid ester if necessary, and other monomer(s) if necessary. In this polymerization, the polymerization itself is usually performed after preparing a monomer mixture by mixing a plurality of monomers. The polymerization method is not limited to any particular methods. In view of productivity, a radical polymerization method such as a bulk polymerization method and a solution polymerization method is preferred.

The Mw of the SMA resin (SM) is preferably 40,000 to 300,000. When the Mw is 40,000 or more, the (meth)acrylic resin-containing layer is excellent in scratch resistance and impact resistance. When the Mw is 300,000 or less, the (meth) acrylic resin-containing layer is excellent in moldability.

In order to adjust TgA to 120°C or higher, or the like, the amount of the SMA resin (SM) contained in the resin composition (MR) is preferably 20 to 95% by mass, more preferably 45 to 95% by mass, and particularly preferably 50 to 90% by mass.

The resin composition (MR) is obtained, for example, by mixing the methacrylic resin (PM) and the SMA resin (SM). Examples of the mixing method include a melt mixing method and a solution mixing method. In the melt mixing method, melt-kneading may be performed under an atmosphere of an inert gas such as a nitrogen gas, an argon gas, and a helium gas if necessary, with a melt-kneader such as a single-screw or multi-screw kneader, an open roll, a Banbury mixer, and a kneader. In the solution mixing method, the methacrylic resin (PM) and the SMA resin (SM) may be mixed by dissolving them in an organic solvent such as toluene, tetrahydrofuran, and methyl ethyl ketone.

In one embodiment, the (meth)acrylic resin-containing layer may contain the methacrylic resin (PM) and one or more other polymers if necessary.

In another embodiment, the (meth)acrylic resin-containing layer may be composed of the methacrylic resin composition (MR). The methacrylic resin composition (MR) may contain the methacrylic resin (PM), the SMA resin (SM), and one or more other polymers if necessary.

There is no particular limitation on the other polymer(s). Examples include other thermoplastic resins such as polyolefin such as polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins. The amount of the other polymer(s) contained in the (meth) acrylic resin-containing layer is preferably 10% by mass or less, more preferably 5% by mass or less, and particularly preferably 2% by mass or less.

The (meth)acrylic resin-containing layer may contain various additives if necessary. Examples of the additive include antioxidants, thermal degradation preventing agents, ultraviolet absorbers, light stabilizers, lubricants, mold release agents, polymer processing aids, antistatic agents, flame retardants, dyes/pigments, light-diffusing agents, matting agents, impact-resistance modifiers such as core-shell particles and block copolymers, and phosphors. The amount of the additive(s) contained may be determined as appropriate as long as the effect of the present invention is not impaired. For example, based on 100 parts by mass of the resin constituting the (meth)acrylic resin-containing layer, the amount of an antioxidant contained is preferably 0.01 to 1 part by mass; the amount of an ultraviolet absorber contained is preferably 0.01 to 3 parts by mass; the amount of a light stabilizer contained is preferably 0.01 to 3 parts by mass; the amount of a lubricant contained is preferably 0.01 to 3 parts by mass; and the amount of a dye/pigment contained is preferably 0.01 to 3 parts by mass.

When other polymer(s) and/or additive(s) are contained in the methacrylic resin (PM), they may be added during or after the polymerization of the methacrylic resin (PM).

When other polymer(s) and/or additive(s) are contained in the methacrylic resin composition (MR), they may be added during the polymerization of the methacrylic resin (PM) and/or the SMA resin (SM), or during or after the mixing of these resins.

In view of stability of heat-melt molding, the melt flow rate (MFR) of the resin constituting the (meth)acrylic resin-containing layer is preferably 1 to 10 g/10 minutes, more preferably 1.5 to 7 g/10 minutes, and particularly preferably 2 to 4 g/10 minutes. As used herein, the MFR of the resin constituting the (meth)acrylic resin-containing layer is a value that is measured at a temperature of 230°C under a load of 3.8 kg with a melt indexer unless otherwise specified.

(Polycarbonate resin-containing layer)

The thermoplastic resin layer included in the laminate according to the present invention preferably includes a polycarbonate resin-containing layer. The polycarbonate resin-containing layer contains one or more polycarbonate resin (PC). The polycarbonate resin (PC) is preferably obtained by copolymerizing one or more divalent phenols and one or more carbonate precursors. Examples of the production method include an interfacial polymerization method in which an aqueous solution of divalent phenol and an organic solvent solution of a carbonate precursor are reacted at the interface, and a transesterification method in which divalent phenol and a carbonate precursor are reacted at a high temperature under reduced pressure and solvent-free conditions.

Examples of the divalent phenol include 2,2-bis(4-hydroxyphenyl)propane (commonly known as bisphenol A), 1,1-bis(4-hydroxyphenyl)ethane, 1,1-bis(4-hydroxyphenyl)cyclohexane, 2,2-bis(3-methyl-4-hydroxyphenyl)propane, 2,2-bis(3,5-dimethyl-4-hydroxyphenyl)propane, bis(4-hydroxyphenyl)sulfide, and bis(4-hydroxyphenyl)sulfone. Among them, bisphenol A is preferred. Examples of the carbonate precursor include carbonyl halide such as phosgene; carbonate esters such as diphenyl carbonate; and haloformate such as dihaloformate of divalent phenol.

The molecular weight Mw of the polycarbonate (PC) is preferably 10,000 to 100,000, and more preferably 20,000 to 70,000. When the molecular weight Mw is 10,000 or more, the polycarbonate resin-containing layer has excellent impact resistance and excellent heat resistance. When the molecular weight Mw is 100,000 or less, the polycarbonate resin-containing layer has excellent moldability.

Commercially available polycarbonate products may be used as the polycarbonate resin (PC). Examples include "Caliber (registered trademark)" and "SD Polyca (registered trademark)" manufactured by Sumika Styron Polycarbonate Limited, "Eupilon/Novarex (registered trademark)" manufactured by Mitsubishi Engineering Plastics Corporation "Taflon (registered trademark)" manufactured by Idemitsu Kosan Co., Ltd., and "Panlite (registered trademark)" manufactured by Teijin Chemicals Ltd.

As used herein, the glass transition temperature of the polycarbonate resin-containing layer is represented by TgB. TgB is 120 to 180°C and preferably 135 to 165°C in view of thermoformability during a curved-surface forming process or the like. If TgB is lower than 120°C, the in-plane retardation value (Re) may significantly decrease when the thermoplastic resin layer is exposed to a high temperature in the producing process, in the thermoforming process, or under the operating environment. If TgB is higher than 180°C, it is necessary to raise the forming temperature in the thermoforming, thus arising a possibility that a defect in external appearance such as cracking may occur in the cured film formed on at least one surface of the thermoplastic resin layer.

Note that the polycarbonate resin-containing layer may be a layer composed of one or more polycarbonate resin (PC) alone, or may be a layer containing one or more polycarbonate resin (PC) and one or more other components. The glass transition temperature of polycarbonate resin (PC) is preferably 120 to 180°C and more preferably 130 to 165°C. However, in the case where the polycarbonate resin-containing layer contains a plurality of components, as long as TgB of the whole layer is within the range of 120 to 150°C, the polycarbonate resin-containing layer may contain a component having a glass transition temperature outside the range of 120 to 150°C.

If the temperature difference (TgB - TgA) between the glass transition temperatures of the polycarbonate resin-containing layer and the (meth)acrylic resin-containing layer is excessively large on the negative side, stress exerted to the (meth)acrylic resin-containing layer increases when the thermoplastic resin layer is exposed to a high temperature. For example, the stress exerted to the (meth)acrylic resin-containing layer during the thermoforming increases, so that cracking may occur in the (meth)acrylic resin-containing layer. In view of reducing the stress exerted to the (meth)acrylic resin-containing layer when the thermoplastic resin layer is exposed to a high temperature, e.g., in view of reducing the stress during the thermoforming and suppressing cracking in the (meth)acrylic resin-containing layer, the temperature difference TgB - TgA is - 5°C or more and preferably -1°C or more.

If the glass transition temperature difference (TgB - TgA) is excessively large on the positive side, the temperature of the (meth)acrylic resin-containing layer at which thermoforming such as a curved-surface forming process can be performed may become much higher than the glass transition temperature (TgA) of the (meth)acrylic resin-containing layer. If the thermoforming temperature is too high relative to TgA, surface roughness or the like may occur and the surface properties may deteriorate. In view of suppressing the deterioration of the surface properties of the (meth) acrylic resin-containing layer when the thermoplastic resin layer is exposed to a high temperature, the temperature difference TgA - TgB is +20°C or less, and preferably 15°C or less.

The glass transition temperature of a typical polycarbonate resin (PC) is about 150°C. Examples of the aspect in which TgB can be lower than the glass transition temperature of the case using the polycarbonate resin (PC) alone, for example, TgB of 120 to 145°C can be achieved, include a first aspect in which the polycarbonate resin-containing layer contains an alloy of polycarbonate resin (PC) and aromatic polyester, and a second aspect in which the polycarbonate resin-containing layer contains a polycarbonate resin (PC) and a plasticizer or anti-plasticizer. In the second aspect, the polycarbonate resin-containing layer preferably contains 85 to 99 parts by mass of polycarbonate (PC) and 15 to 1 part by mass of a plasticizer or anti-plasticizer.

<Aromatic Polyester>

Examples of the aromatic polyester include a polycondensate of an aromatic dicarboxylic acid component and a diol component.

Typical examples of the aromatic dicarboxylic acid component include terephthalic acid, isophthalic acid, and naphthalene dicarboxylic acid. Examples of other dicarboxylic acid components include oxalic acid, malonic acid, succinic acid, adipic acid, azelaic acid, sebacic acid, neopentyl acid, isophthalic acid, naphthalene dicarboxylic acid, diphenyl ether dicarboxylic acid, and p-oxybenzoic acid. These can be used singly or in combination of two or more thereof.

Typical examples of the diol component include ethylene glycol, diethylene glycol, triethylene glycol, and cyclohexane dimethanol. Examples of other diol components include propylene glycol, trimethylene glycol, tetramethylene glycol, hexamethylene glycol, diethylene glycol, neopentyl glycol, polyalkylene glycol, 1,4-cyclohexane dimethanol, glycerol, pentaerythritol, trimethylol, and methoxypolyalkylene glycol. These can be used singly or in combination of two or more thereof.

Typical examples of the aromatic polyester include polyethylene terephthalate (PET), which is a polycondensate of terephthalic acid and ethylene glycol. Copolymerized polyesters using terephthalic acid and ethylene glycol, and other dicarboxylic acid components and/or other diol components are also preferred.

Other typical examples of the aromatic polyester include polybutylene terephthalate (PBT), which is a polycondensate of terephthalic acid or dimethyl terephthalate and 1,4-butanediol. Copolymerized polyesters using terephthalic acid and 1,4-butanediol, and other dicarboxylic acid components and/or other diol components are also preferred.

Among them, a copolymerized polyester (PCTG) in which cyclohexane dimethanol (1.4-CHDM) is used in combination with a part of ethylene glycol, preferably 55 to 75 mol%, and more preferably 50 to 75 mol% of ethylene glycol in PET, and a copolymerized polyester (PCTG) in which isophthalic acid is used in combination with a part of terephthalic acid, preferably 10 to 30 mol% of terephthalic acid in PBT, and a combination thereof and the like are preferred. These copolymerized polyesters may be melted and blended with polycarbonate, so that they can be completely and mutually solved, and thereby converted into polymer alloys. Furthermore, by this conversion into the polymer alloy, the glass transition temperature can be effectively lowered.

<Plasticizer>

The plasticizer is not limited to any particular plasticizers. Examples of the plasticizer include phosphoric ester-based compounds such as trimethyl phosphate, triethyl phosphate, tributyl phosphate, tris(2-ethylhexyl) phosphate, triphenyl phosphate, tricresyl phosphate, trixylenyl phosphate, cresyl diphenyl phosphate, and 2-ethylhexyl diphenyl phosphate; phosphite-based compounds corresponding to the phosphoric ester-based compounds; phthalate ester-based compounds such as dimethyl phthalate, diethyl phthalate, dibutyl phthalate, bis(2-ethylhexyl phthalate), diisodecyl phthalate, butyl benzyl phthalate, diisononyl phthalate, and ethyl phthalylethyl glycolate; trimellitic acid ester-based compounds such as tris(2-ethylhexyl) trimelitate; aliphatic dibasic acid ester-based compounds such as dimethyl adipate, dibutyl adipate, diisobutyl adipate, bis(2-ethylhexyl) adipate, diisononyl adipate, diisodecyl adipate, diisodecyl adipate, bis(butyl diglycol) adipate, bis(2-ethylhexyl) azelate, dimethyl sebacate, dibutyl sebacate, bis(2-ethylhexyl) sebacate, and diethyl succinate; polyester-based compounds containing aliphatic dibasic acid units contained in the aliphatic dibasic acid ester-based compounds; ricinoleic acid ester-based compounds such as methylacetylricinolate; acetic ester-based compounds such as triacetin and octyl acetate; and sulfonamide-based compounds such as n-butylbenzene sulfonamide. Among them, phosphoric ester-based compounds, in particular, cresyl diphenyl phosphate (CDP), tricresyl phosphate (TCP) and the like are preferred because they have excellent compatibility with polycarbonate and they have excellent transparency after being mutually solved.

<Anti-plasticizer>

The anti-plasticizer is not limited to any particular anti-plasticizers. Industrially available biphenyl compounds, terphenyl compounds, and the like can be used as the anti-plasticizer. The biphenyl compound is a compound in which two benzene rings are bonded, while the terphenyl compound is a compound in which three benzene rings are bonded. Polycaprolactone may also be used as the anti-plasticizer.

The polycarbonate resin-containing layer may contain one or more other polymers and/or various additives if necessary. As the other polymers and various additives, polymers and various additives similar to those described above in the description of the (meth)acrylic resin-containing layer may be used. The amount of the other polymer(s) contained in the polycarbonate resin-containing layer is preferably 15% by mass or less, more preferably 10% by mass or less, and particularly preferably 5% by mass or less. The amount of the additive(s) may be determined as appropriate as long as the effect of the present invention is not impaired. Based on 100 parts by mass of the polycarbonate resin (PC), it is preferred that the amount of an antioxidant is 0.01 to 1 part by mass; the amount of an ultraviolet absorber is 0.01 to 3 parts by mass; the amount of a light stabilizer is 0.01 to 3 parts by mass; the amount of a lubricant is 0.01 to 3 parts by mass; and the amount of a dye/pigment is 0.01 to 3 parts by mass.

When other polymer(s) and/or additive(s) are added to the polycarbonate resin (PC), they may be added during or after the polymerization of the polycarbonate resin (PC).

In view of stability of heat-melt molding, the MFR of the resin constituting the polycarbonate resin-containing layer is preferably 1 to 30 g/10 minutes, more preferably 3 to 20 g/10 minutes, and particularly preferably 5 to 10 g/10 minutes. As used herein, the MFR of the resin constituting the polycarbonate resin-containing layer is a value that is measured at a temperature of 300°C under a load of 1.2 kg with a melt indexer unless otherwise specified.

(Thickness of Laminate and Each Layer)

The total thickness of the laminate according to the present invention is 75 μm to 5000 μm (5 mm), and is preferably more than 500 μm and 3000 μm (3 mm) or less, and particularly preferably 800 μm to 3000 μm (3 mm) when it is used for a protective plate or the like for a panel display such as a liquid crystal display, a touch panel display, or the like. If the laminate is too thin, the rigidity thereof may be insufficient. If the laminate is too thick, it may hinder weight-saving of a panel display such as a liquid crystal display, a touch panel display, or the like.

In the present invention, even under relatively thick conditions in which the total thickness of the laminate is more than 500 μm and 3000 μm or less, cracks in the cured film due to tensile stress in the plane direction acting on the outer side of the curved surface can be effectively suppressed during thermoforming.

The thickness of the (meth)acrylic resin-containing layer is not limited to any particular thicknesses, but preferably 40 to 200 μm, more preferably 50 to 150 μm, and particularly preferably 60 to 100 μm. If the (meth)acrylic resin-containing layer is too thin, scratch resistance may deteriorate, while if the (meth)acrylic resin-containing layer is too thick, impact resistance may deteriorate.

The thickness of the polycarbonate resin-containing layer is preferably 0.3 to 4.9 mm and more preferably 0.6 to 2.9 mm.

(Laminated Structure)

The laminate according to the present invention may include another resin layer as long as the laminate has a cured film on at least one surface of the thermoplastic resin layer including the (meth)acrylic resin-containing layer. Examples of the laminated structure of the thermoplastic resin layer included in the laminate according to the present invention suitable for a protective plate for display include a two-layer structure of (a polycarbonate resin-containing layer)/(a (meth)acrylic resin-containing layer); a three-layer structure of (a (meth)acrylic resin-containing layer)/(a polycarbonate resin-containing layer)/(a (meth)acrylic resin-containing layer); a three-layer structure of (a (meth)acrylic resin-containing layer)/(a polycarbonate resin-containing layer)/(another resin layer): and a three-layer structure of (another layer)/(a (meth)acrylic resin-containing layer)/(a polycarbonate resin-containing layer).

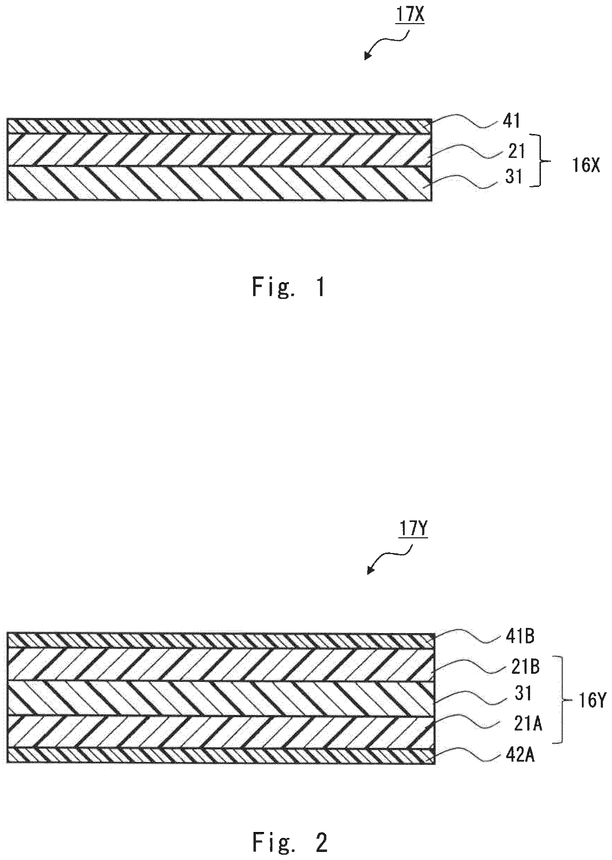

Fig. 1 and Fig. 2 are schematic cross-sections of laminates according to the first and second embodiments in accordance with the present invention. In the figures, symbols 17X and 17Y indicate laminates, and symbols 16X and 16Y indicate thermoplastic resin layers. Symbols 21, 21A, 21B indicate (meth)acrylic resin-containing layers, symbol 31 indicates a polycarbonate resin-containing layer, and symbols 41, 41A, 41B indicate cured films.

In laminate 17X according to the first embodiment, cured film 41 is formed on (meth)acrylic resin-containing layer 21 of thermoplastic resin layer 16X having a two-layer structure of polycarbonate resin-containing layer 31-(meth)acrylic resin-containing layer 21.

In laminate 17Y according to the second embodiment, cured films 41A and 41B are respectively formed on both surfaces of thermoplastic resin layer 16Y having a three-layer structure of (first (meth)acrylic resin-containing layer 21A)/(polycarbonate resin-containing layer 31)/(second (meth)acrylic resin-containing layer 21B). Note that the configuration of the thermoplastic resin layer and the laminate can be changed in design as desired.

[Method for Producing Laminate]

The method for producing the laminate according to the present invention is not particularly limited, but preferably, can include a step (S1) of providing a thermoplastic resin layer having a monolayer structure or a laminated structure including a (meth)acrylic resin-containing layer, a step (S2) of applying a curable composition on the (meth) acrylic resin-containing layer of the thermoplastic resin layer to form a coating film, and a step (S3) of curing the coating film to form a cured film.

(Step (S1))

The thermoplastic resin layer having a monolayer structure or a laminated structure including a (meth)acrylic resin-containing layer according to the present invention can be produced by a known method such as an extrusion method, a cast molding method, and an injection molding method. Among them, an extrusion method is preferred. In the case of a thermoplastic resin layer having a laminated structure, a coextrusion molding method is preferred.

Hereinafter, a method for producing a thermoplastic resin layer by an extrusion method will be described.

The thermoplastic resin layer having a monolayer structure can be molded by placing one or more (meth)acrylic resins, other polymer(s) if necessary, and other additive(s) if necessary in an extruder; melt-kneading; extruding the resulting resin in a molten state from a T-die in a film-like, sheet-like, or platelike form; pressurizing and cooling it with a plurality of cooling rolls; and pulling out it by a take-off roll. The thermoplastic resin layer that is molded in this way can have the form of a thermoplastic resin film, a thermoplastic resinsheet, or a thermoplastic resin plate, depending on the thickness.

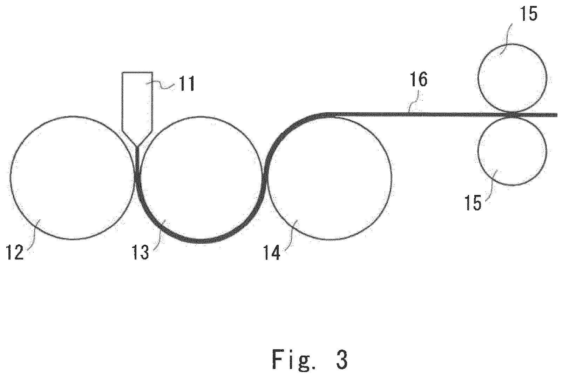

Fig. 3 shows a schematic diagram of an extrusion molding apparatus including T-die 11, first to third cooling rolls 12 to 14, and a pair of take-off rolls 15, as an embodiment. A thermoplastic resin layer extruded from T-die 11 is cooled with a plurality of cooling rolls 12 to 14. The pressurized and cooled thermoplastic resin layer (thermoplastic resin film, thermoplastic resin sheet, or thermoplastic resin plate) 16 is pulled out by the pair of take-off rolls 15. The number of cooling rolls can be designed as appropriate. Note that the configuration of the manufacturing apparatus may be changed in design as desired without departing from the spirit of the present invention.

In the case of a laminated structure, the thermoplastic resin layer can be molded by laminating resin materials of each layer in a molten state by a feed block method in which resins are laminated before being fed to a T-die or by a multi-manifold method in which resins are laminated inside a T-die; then extruding the materials in a form of a laminated sheet from the T-die; pressurizing and cooling using a plurality of cooling rolls; and pulling out it by a take-off roll.

As the thermoplastic resin layer having a monolayer structure or a laminated structure, a commercially available thermoplastic resin film, a thermoplastic resinsheet, or a thermoplastic resin plate may be used.

For the purpose of improving the adhesion of the cured film, the surface of the obtained thermoplastic resin layer to have a cured film thereon may be subjected to a surface treatment such as a surface irregularity treatment such as a primer treatment, a sandblasting treatment, and a solvent treatment; a surface oxidation treatment such as a corona discharge treatment, a chromic acid treatment, an ozone irradiation treatment, and an ultraviolet irradiation treatment; or the like.

(Steps (S2) and (S3))

In step (S2), the curable composition is applied on the (meth)acrylic resin-containing layer of the thermoplastic resin layer obtained in step (S1) to form a coating film. As step (S2), step (S2-L) of applying a photopolymerizable curable composition on the (meth)acrylic resin-containing layer of the thermoplastic resin layer to form a coating film is preferred.

In step (S3), the coating film is cured to form a cured film. As step (S3), step (S3-L) of irradiating a coating film with light such as ultraviolet light and photocuring the coating film to form a cured film is preferred.

These steps can be performed by known methods. The composition of the curable composition and the curing conditions can be adjusted to form a cured film having desired physical properties.

As described above, the present invention can provide a laminate having high surface hardness and good scratch resistance, and suppressed cracking of a cured film during thermoforming, and being suitable for a protective plate for thermoforming. The present invention can also provide a method for producing the laminate.

[Use]

The laminate according to the present invention is suitable as a protective plate which is subjected to a shaping process such as a curved-surface forming process and is used for a panel display such as a liquid crystal display, or a touch panel, or the like; an interior material, an exterior material, and a window material for vehicles and building materials; and the like. For example, the laminate according to the present invention is suitable as a protective plate for a panel display such as a liquid crystal display, a touch panel, or the like used in ATMs of financial institutions such as banks; vending machines; and digital information devices such as mobile phones (including smartphones), portable information terminals (PDAs) such as tablet-type personal computers, digital audio players, portable game machines, copying machines, facsimile machines, and car navigation systems.

Examples

Examples according to the present invention and comparative examples will be described.

[Evaluation Items and Evaluation Methods]

The evaluation items and the evaluation methods are as follows.

(Copolymerization Composition of SMA Resin (SM))

Copolymerization composition of an SMA resin (SM) was determined by a $^{13}$C-NMR method with a nuclear magnetic resonance apparatus ("GX-270" manufactured by JEOL Ltd.) in accordance with the following procedure.
A sample solution was prepared by dissolving 1.5 g of an SMA resin (SM) in 1.5 ml of deuterated chloroform and a $^{13}$C-NMR spectrum was measured in a room-temperature environment under the condition that the number of accumulations was 4,000 to 5,000. As a result, the following values were obtained.

- [Integrated intensity of carbon peak (around 127, 134, 143 ppm) of the benzene ring (having 6 carbon atoms) in styrene unit]/6
- [Integrated intensity of carbon peak (around 170 ppm) at carbonyl site (having 2 carbon atoms) in maleic anhydride unit]/2
- [Integrated intensity of carbon peak (around 175 ppm) at carbonyl site (having 1 carbon atom) in MMA unit]/1

From the area ratio among the above-shown values, a molar ratio among the styrene unit, the maleic anhydride unit, and the MMA unit in the sample was determined. The mass composition of each monomer unit in the SMA resin (SM) was determined from the obtained molar ratio and the mass ratio of that monomer unit (styrene unit : maleic anhydride unit : MMA unit = 104 : 98 : 100).

(Glass Transition Temperature (Tg))

The glass transition temperature (Tg) of the resin was measured in accordance with JIS K7121. In an aluminum pan, 10 mg of resin was placed, and the measurement was performed using a differential scanning calorimeter (DSC-50 manufactured by Rigaku Corporation). After performing a nitrogen substitution for 30 minutes or longer, under a nitrogen gas flow of 10 ml/min, the temperature was raised from 25°C to 230°C at a rate of 10°C/min, then maintained at the raised temperature for 10 minutes, and then cooled to 25°C (primary scanning). Next, the temperature was raised to 230°C at a rate of 10°C/min (secondary scanning). The glass transition temperature was calculated by a midpoint method from a result obtained by the secondary scanning. Note that when a plurality of Tg data is obtained for a resin composition containing at least two types of resins, a value derived from the resin constituting the main component was used as Tg data.

(Weight Average Molecular Weight (Mw))

Mw of the resin was determined by a GPC method in accordance with the following procedure. Tetrahydrofuran was used as an eluent. Two "TSKgel SuperMultipore HZM-M" and one "SuperHZ4000" manufactured by Tosoh Corporation were connected in series and used as a column. HLC-8320 (product number) equipped with a differential refractive index detector (an RI detector) manufactured by Tosoh Corporation was used as a GPC apparatus. A sample solution was prepared by dissolving 4 mg of a resin in 5 ml of tetrahydrofuran. The temperature of a column oven was set to 40°C. A chromatogram was measured by injecting 20 $\mu$l of the sample solution at the rate of 0.35 ml/min as an eluent flow. Ten samples of polystyrene standards having molecular weights in a range of 400 to 5,000,000 were measured by the GPC, and a calibration curve indicating a relation between retention time and molecular weight was created. The molecular weight Mw was determined based on this calibration curve.

(Triad syndiotacticity (rr) (rr ratio))

$^1$H-NMR measurements were performed on methacrylic resin for which the rr ratio was to be measured. A nuclear magnetic resonance device (ULTRA SHIELD 400 Plus manufactured by Bruker Corporation) was used as a measurement apparatus. Per 10 mg of the sample, 1 mL of deuterated chloroform was used as a deuterated solvent. The measured temperature was set to room temperature (20 to 25°C), and the number of accumulations was set to 64. The area of the region of 0.6 to 0.95 ppm (X) and the area of the region of 0.6 to 1.35 ppm (Y) were measured when the reference substance (TMS) was set to 0 ppm. And the value calculated by the expression: $(X/Y) \times 100$ was taken as the triad syndiotacticity (rr) (rr ratio) (%).

(Thickness of Each Layer)

The thickness of each layer (layer A, layer B) of a thermoplastic resin layer of a monolayer structure or a laminated structure or a cured film was measured with an ultramicrotome by obtaining a cross-section of a thermoplastic resin layer of a monolayer structure or a laminated structure or laminate, and by observing with an optical microscope.

(Bending Radius R Without Cracking)

A rectangular sample with 60 mm width and 200 mm length was cut out from the laminate. This sample was heated at 170°C for 5 minutes, then immediately loaded onto a convexly-curved surface of a semi-cylindrical, convex-die. Furthermore, immediately, a concave die having a concavely-curved surface in shape along with the convexly-curved surface shape of the convex die and having greater bending radius than that of the convexly-curved surface of the convex die by the sample thickness, was placed on the sample. And the sample was pressed at 152.3°C for 30 seconds. At this time, the laminate was set into the die so that the cured film side of the laminate was the outside (the concave die side), and in cross-sectional view, the length direction of the laminate was along the circular arc of the convex die. After the heat press, the laminate was cooled to room temperature, and the laminate curved in a cross-sectional circular arc shape was removed from the die. The inner surface of the curved laminate was painted black using a black oily pen, and the cured film on the outside of the curved laminate was visually observed, and the presence or absence of cracks in the cured film was examined. The diameters of the convex shapes were set to 5 conditions of 10 mm, 30 mm, 45 mm, 75 mm, and 120 mm. Among the evaluations under these 5 conditions, the smallest bending radius R without cracking was determined as the "bending radius R without cracking". The smaller the bending radius R without cracking, the higher the suppression effect of cracks in the cured film during thermoforming.

(Pencil Hardness)

The laminate was allowed to stand still under an environment of 23°C/50% relative humidity for 24 hours, and then the pencil hardness of the cured film was evaluated in accordance with JIS K5600-5-4. A table-top mobile pencil scratch tester (model P) (manufactured by Toyo Seiki Seisaku-sho, Ltd.) was used to check for the presence/absence of scratches while pressing the core of the pencil against the surface of the cured film included in the laminate under conditions of angle 45° and load 750 g. The hardness of the core of the pencil increased sequentially, and the hardness of the core, which was one step softer than the time when the scratch occurred, was adopted as the data.

(Composite Elastic Modulus and Hardness)

The composite elastic modulus and the hardness of the cured film were determined by the nanoindentation method in accordance with ISO14577 using a SPM device (multifunctional SPM device manufactured by Hitachi High-Tech Corporation). The measuring environmental conditions were set to a temperature of 25°C/relative humidity of 50%.
A Berkovich indenter was used as a probe, and the tip of the probe was press-fitted against the surface of the cured film included in the laminate under conditions of a press-in pressure of 50 μN for 3 seconds, and the load and the displacement of the depth of press-fit were detected. After the tip of the probe is press-fitted against the surface of the cured film, a concave portion is formed according to the tip shape of the probe. Visually, a point at the top and a point at the bottom in the concave portion were selected, and the composite elastic modulus and the hardness were calculated theoretically from the load-displacement curve (unloading curve) at each point by the following method. These procedures were performed at 30 locations by changing the surface position of the cured film to calculate the average values of the composite elastic modulus and the hardness.
The composite elastic modulus Er was calculated based on the following Expression (4) from the stiffness S and the projected contact area Ac.

$$Er = S \frac{\sqrt{\pi}}{2\sqrt{Ac}}$$

$$\ldots (4)$$

Stiffness S was calculated from the slope of the unloading curve in the load-displacement curve. The slope of the unloading curve refers to the slope of the unloading curve at high displacement, that is, the slope of the unloading curve immediately after the start of unloading after press-fitting a probe.

The contact projection area Ac was determined by a predetermined expression from the contact depth (the difference between the predetermined pressing depth and the surface displacement at the peripheral surface of the contact point determined from the gradient of the unloading curve at the maximum load) and the geometry-specific constant and correction term of the probe.

The hardness H was calculated based on the following Expression (5) from the maximum load Wmax and the projected contact area Ac.

$$H = Wmax/Ac \ldots (5)$$

The maximum load Wmax refers to the load at the time of press-fitting a probe to a predetermined depth of press-fitting.

(Adhesion of Cured Film (Cross-Cut Method))

The laminate was allowed to stand still under an environment of 23°C/50% relative humidity for 24 hours, and then the adhesion of the cured film to the (meth)acrylic resin-containing layer was evaluated in accordance with JIS K5600-5-6. The number of cut lines in each direction of the lattice pattern was set to 11 to form a test compartment of 100 blocks.

Using a cutter guide manufactured by Jig TP Giken Co., Ltd., 11 cut lines were made in the cured film in the depth to reach the (meth)acrylic resin-containing layer and in two straight directions orthogonal to each other at 1 mm intervals, respectively, to produce a cross-cut having a total of 100 blocks per square of 1 mm. After the adhesive tape was strongly applied to the cross-cut, the adhesive tape was pulled off at once in an angular direction of about 60° from the end, and the number of blocks that were not peeled off was counted visually. The evaluation results are shown in fractions (number of blocks not peeled/100).

(Breaking Elongation)

The breaking elongation of the cured film was determined by the following procedure using a biaxially stretched birefringence measuring device (SDR-563K manufactured by Eto Co., Ltd.).

A rectangular sample of 10 mm width and 200 mm length was cut out from the laminate. This sample was heated at 160°C for 1 minute, then both ends in the length direction were gripped with a pair of chucks, and a tensile test was performed at a speed of 60 mm/min. At this time, a high-speed camera (CRYSTA manufactured by PHOTRON LIMITED) was installed to oppose the cured film on the top of the sample, and continuous imaging was performed at the number of frames of 60 sheets/second, and the timing at which cracks occurred in the cured film was detected. The breaking elongation was determined by the ratio (%) of the sample length at the time of cracking to the initial (pre-tensile) sample length taken as 100%. The greater breaking elongation is preferred.

[Resin Plate, Resin]

The provided resin plate and resin are as follows.

<(Meth)Acrylic Resin Plate>

(CG-1) COMOGLAS CG P (transparent) manufactured by KURARAY CO., LTD., polymethyl methacrylate (PMMA),

thickness 2000 μm.
(CG-2) COMOGLAS CG P (transparent) manufactured by KURARAY CO., LTD., polymethyl methacrylate (PMMA), thickness 500 μm.

<Polyethylene Terephthalate Resin Film>

(PET-1) A4300 (double-sided adhesion enhancement treatment) manufactured by TOYOBO CO., LTD., thickness 125 μm.

<SMA Resin>

(SM-1)
An SMA resin (SM-1) (styrene-maleic anhydride-MMA copolymer, styrene unit/maleic anhydride unit/MMA unit (mass ratio) = 56/18/26, Mw = 150,000, Tg = 138°C) was obtained according to a method described in International Patent Publication No. WO2010/013557.

<(Meth)acrylic resin>

(PM-1)

In an autoclave, 96.5 parts by mass of methyl methacrylate (MMA), 2.5 parts by mass of methyl acrylate (MA), 0.06 parts by mass of azobisisobutyronitrile, 0.25 parts by mass of n-octyl mercaptan, 250 parts by mass of water, 0.09 parts by mass of a dispersant, and 1.07 parts by mass of a pH adjusting agent were charged. Then, while stirring the content solution, the temperature of the solution was raised from room temperature to 70°C, and kept at 70°C for 120 minutes to carry out the polymerization reaction. The temperature of the solution was then lowered to room temperature, and the reaction solution was removed from the autoclave. The reaction solution was filtered, and the obtained solid was washed with water and dried in hot air at 80°C for 24 hours. Thus, a methacrylic resin (PM-1) with Tg = 110°C was obtained as beads.

(MK-1)

The following two types of methacrylic resin were provided.

(k-1) PARAPET SP-01 manufactured by KURARAY CO., LTD., Tg = 131°C, rr ratio = 75%.
(k-2) PARAPET EH manufactured by KURARAY CO., LTD., Mw = 30,000, Tg = 118°C, rr ratio = 50%.

Methacrylic resin (k-1) at 90 parts by mass and methacrylic resin (k-2) at 10 parts by mass were melt-kneaded at 230°C using a twin-screw extruder (TEM-28 manufactured by TOSHIBA MACHINE CO., LTD.), and then extruded into a strand to produce (meth)acrylic resin (MK-1) (Tg = 130°C; rr ratio = 72.5%) as pellets.

<(Meth)acrylic resin composition >

(MR-1)

SMA resin (SM-1) at 70 parts by mass, a (meth)acrylic resin (PM-1) at 30 parts by mass, and glyceryl monostearate (EXCEL T95 manufactured by Kao Corporation) at 0.03 parts by mass as a lubricant were charged into a twin-screw extruder (TEM-28 manufactured by TOSHIBA MACHINE CO., LTD.), and melt-kneaded at 230°C, then extruded, and cut into a strand. Thus, a (meth)acrylic resin composition (MR-1) with Tg = 125°C was obtained as pellets.

<Polycarbonate Resin>

(PC-1) SD POLYCA (registered trademark) PCX manufactured by Sumika Styron Polycarbonate Limited (MFR = 6.7 g/10 min under a load of 1.2 kg at a temperature of 300°C, Tg = 150°C).

<Polyester Resin>

(E-1) Polycyclohexanedimethylene terephthalate.

<Polycarbonate Resin-Containing Composition>

(PC-2)

A polycarbonate resin (PC-1) at 34 parts by mass and a polyester resin (E-1) at 67 parts by mass were mixed to obtain a polycarbonate resin-containing composition (PC-2) with Tg = 125°C.

[Examples 1-5, 9-13, 15, 17 (Reference Examples) and Example 6-8, 14, 16, 18 and 19, Comparative Examples 1-12, and Reference Examples 1-12]

(Provision or Production of Thermoplastic Resin Layer having Monolayer Structure or Laminated Structure)

In each of Examples 1 to 5, 9-13, 15, 17 (Reference Examples) and Example 6 to 8, 14, 16, 18 and 19, Comparative Examples 1 to 12, and Reference Examples 1 to 12, a thermoplastic resin layer having a monolayer structure or a laminated structure was provided or produced by any of the following methods.
As the thermoplastic resin layer having a monolayer structure, a (meth)acrylic resin plate (CG-1), a (meth)acrylic resin plate (CG-2), or a polyethylene terephthalate resin film (PET-1) was provided.
The thermoplastic resin layer having a laminated layer structure was coextruded by the following method.
The two kinds of resins for layer A and layer B were respectively charged into a hopper of respective 25 mm Φ-type vent-type single-axis extruders (VGM25-28EX manufactured by GM ENGINEERING Co., Ltd.), melt-kneaded, and then the resins were coextruded at an extrusion temperature of 240°C with a multi-manifold die. The thickness of each layer was adjusted by adjusting the discharge amount of each resin.
The thermoplastic resin layer in a molten state was then sandwiched between a first cooling roll and a second cooling roll adjacent to each other, wrapped around the second cooling roll, sandwiched between the second cooling roll and a third cooling roll, and cooled by wrapping around the third cooling roll. The thermoplastic resin layer obtained after cooling was pulled out by a pair of take-off rolls. The layer B was in contact with the third cooling roll. In this way, a thermoplastic resin layer having a two-layer structure was obtained.
In Reference Examples 1, 10, and 12, the surface of the provided or produced thermoplastic resin layer to have a cured film thereon was subjected to a corona discharge treatment by a known method.
For each example, the type and thickness of the resin in each layer of the provided or produced thermoplastic resin layer are shown in Tables 1 to 6. Conditions other than those described in the table were set as common conditions.

(Formation of Cured Film)

In each of Examples 1 to 5, 9 to 13, 15, 17 (Reference Examples) and Example 6 to 8, 14, 16, 18 and 19, Comparative examples 1 to 12 and Reference Examples 1 to 12, one of cured films (HC-A-1) to (HC-A-4) and (HC-N-1) to (HC-N-6) was formed on the (meth)acrylic resin-containing layer (layer A) in the provided or produced thermoplastic resin layer, and a laminate was produced. The type and thickness of the cured film formed in each example and the evaluation results of the obtained laminates are shown in Table 1 to Table 6.

<Method for Forming Cured Film (HC-A-1)>

On the (meth)acrylic resin-containing layer (layer A) of the provided or produced thermoplastic resin layer, AICAAITRON (registered trademark) Z-850-3 manufactured by Aica Kogyo Co., Ltd., which is a photopolymerizable curable composition containing a polyfunctional urethane acrylate, was applied, and allowed to stand still in an oven at 80°C for 60 seconds, and the solvent was removed. Then, the applied film was irradiated with ultraviolet (UV) light under conditions of the illuminance of 150 mW/cm$^2$ and the cumulative irradiation of 368 mJ/cm$^2$ with an ultraviolet (UV) irradiation device equipped with a high-pressure mercury lamp H04-L41 manufactured by EYE GRAPHICS CO., LTD., to form a cured film (HC-A-1).

<Method for Forming Cured Film (HC-A-2)>

A cured film (HC-A-2) was formed on the (meth)acrylic resin-containing layer (layer A) of the provided or produced thermoplastic resin layer in the same manner as the method for forming the cured film (HC-A-1), except for using AICAAITRON (registered trademark) Z-850 manufactured by Aica Kogyo Co., Ltd., which is a photopolymerizable curable composition containing a polyfunctional urethane acrylate.

<Method for Forming Cured Film (HC-A-3)>

A cured film (HC-A-3) was formed on the (meth)acrylic resin-containing layer (layer A) of the provided or produced thermoplastic resin layer in the same manner as the method for forming the cured film (HC-A-1), except that the cumulative irradiation was changed to 144 mJ/cm$^2$.

<Method for Forming Cured Film (HC-A-4)>

On the (meth)acrylic resin-containing layer (layer A) of the provided or produced thermoplastic resin layer, AICAAITRON (registered trademark) Z-980 manufactured by Aica Kogyo Co., Ltd., which is a photopolymerizable curable composition containing a polyfunctional urethane acrylate, was applied. Then, the applied film was irradiated with ultraviolet (UV) light under conditions of the illuminance of 150 mW/cm$^2$ and the cumulative irradiation of 368 mJ/cm$^2$ using a UV irradiation device equipped with a high-pressure mercury lamp H04-L41 manufactured by EYE GRAPHICS CO., LTD., to form a cured film (HC-A-4).

<Method for Forming Cured Film (HC-N-1)>

On the (meth)acrylic resin-containing layer (layer A) of the provided or produced thermoplastic resin layer, TOMAX (registered trademark) NXD-002AP manufactured by NIPPON KAKO TORYO CO., LTD., which is a photopolymerizable curable composition containing a polyfunctional acrylate, was applied, and allowed to stand still in an oven at 100°C for 30 seconds, and the solvent was removed. Then, the applied film was irradiated with UV under conditions of the illuminance of 150 mW/cm$^2$ and the cumulative irradiation of 522 mJ/cm$^2$ using a UV irradiation device equipped with a high-pressure mercury lamp H04-L41 manufactured by EYE GRAPHICS CO., LTD., to form a cured film (HC-N-1).

<Method for Forming Cured Film (HC-N-2)>

A cured film (HC-N-2) was formed on the (meth)acrylic resin-containing layer (layer A) of the provided or produced thermoplastic resin layer in the same manner as the method for forming the cured film (HC-N-1), except for using TOMAX (registered trademark) NXD-004AP manufactured by NIPPON KAKO TORYO CO., LTD., which contains a polyfunctional acrylate, as a photopolymerizable curable composition.

<Method for Forming Cured Film (HC-N-3)>

A cured film (HC-N-3) was formed on the (meth)acrylic resin-containing layer (layer A) of the provided or produced thermoplastic resin layer in the same manner as the method for forming the cured film (HC-N-1), except for using a composition obtained by mixing 20 parts by mass of TOMAX (registered trademark) NXD-002AP manufactured by NIPPON KAKO TORYO CO., LTD, and 80 parts by mass of TOMAX (registered trademark) NXD-004AP manufactured by NIPPON KAKO TORYO CO., LTD., both of which contain a polyfunctional acrylate, with a mixer, as a photopolymerizable curable composition.

<Method for Forming Cured Film (HC-N-4)>

A cured film (HC-N-4) was formed on the (meth)acrylic resin-containing layer (layer A) of the provided or produced thermoplastic resin layer in the same manner as the method for forming the cured film (HC-N-1), except for using a composition obtained by mixing 35 parts by mass of TOMAX (registered trademark) NXD-002AP manufactured by NIPPON KAKO TORYO CO., LTD and 65 parts by mass of TOMAX (registered trademark) NXD-004AP manufactured by NIPPON KAKO TORYO CO., LTD., both of which contain a polyfunctional acrylate, with a mixer, as a photopolymerizable curable composition.

<Method for Forming Cured Film (HC-N-5)>

A cured film (HC-N-5) was formed on the (meth)acrylic resin-containing layer (layer A) of the provided or produced thermoplastic resin layer in the same manner as the method for forming the cured film (HC-N-1), except for using a composition obtained by mixing 50 parts by mass of "TOMAX(registered trademark) NXD-002AP" manufactured by NIPPON KAKO TORYO CO., LTD, and 50 parts by mass of "TOMAX (registered trademark) NXD-004AP" manufactured by NIPPON KAKO TORYO CO., LTD., both of which contain a polyfunctional acrylate, with a mixer, as a photopolymerizable curable composition.

<Method for Forming Cured Film (HC-N-6)>

A cured film (HC-N-6) was formed on the (meth)acrylic resin-containing layer (layer A) of the provided or produced thermoplastic resin layer in the same manner as the method for forming the cured film (HC-N-1), except for using "TOMAX (registered trademark) FA-3371 clear" manufactured by NIPPON KAKO TORYO CO., LTD., which contains a polyfunctional urethane acrylate, as a photopolymerizable curable composition.

[Table 1]

| | | Example 1 | Example 2 | Example 3 | Example 4 | Example 5 | Reference Example 1 | Comparative Example 1 | Comparative Example 2 | Comparative Example 3 | Comparative Example 4 |
|---|---|---|---|---|---|---|---|---|---|---|---|
| Cured film | Type | HC-N-4 | HC-N-5 | HC-A-1 | HC-A-3 | HC-N-6 | HC-N-6 | HC-N-2 | HC-N-3 | HC-N-1 | HC-A-2 |
| | Thickness [um] | 10 | 10 | 10 | 10 | 10 | 10 | 10 | 10 | 10 | 10 |
| Layer A | Type | CG-1 | CG-1 | CG-1 | CG-1 | CG-1 | CG-1 surface treatment | CG-1 | CG-1 | CG-1 | CG-1 |
| | Thickness [um] | 2000 | 2000 | 2000 | 2000 | 2000 | 2000 | 2000 | 2000 | 2000 | 2000 |
| Layer B | Type | - | - | - | - | - | - | - | - | - | - |
| | Thickness [um] | - | - | - | - | - | - | - | - | - | - |
| Bending radius R without cracking [mm] | | 45 | 75 | 30 | 30 | 75 | 75 | 30 | 30 | 120 | 120 |
| Pencil hardness of cured film included in laminate | | 3H | 4H | 4H | 4H | 4H | 4H | H | H | 5H | 5H |
| Composite elastic modulus X [GPa] | | 9.28 | 9.43 | 5.50 | 3.12 | 5.61 | - | 8.85 | 9.18 | 9.99 | 9.87 |
| Hardness Y [GPa] | | 0.56 | 0.54 | 0.35 | 0.25 | 0.46 | - | 0.43 | 0.48 | 0.64 | 0.53 |
| Z value (=X+10Y) | | 14.88 | 14.81 | 8.98 | 5.61 | 10.21 | - | 13.15 | 13.97 | 16.35 | 15.17 |
| Adhesion of cured film (cross-cut method) | | 100/100 | 100/100 | 100/100 | 100/100 | 98/100 | 100/100 | 100/100 | 100/100 | 87/100 | - |

**EP 3 978 241 B1**

[Table 2]

| | | Example 6 | Example 7 | Example 8 | Example 9 | Comparative Example 5 | Example 10 |
|---|---|---|---|---|---|---|---|
| Cured film | Type | HC-A-1 | HC-A-1 | HC-A-1 | HC-A-1 | HC-A-1 | HC-A-1 |
| | Thickness [um] | 5 | 10 | 20 | 30 | 2.6 | 10 |
| Layer A | Type | MR-1 | MR-1 | MR-1 | MR-1 | MR-1 | MK-1 |
| | Thickness [um] | 75 | 75 | 75 | 75 | 75 | 75 |
| Layer B | Type | E-1 | E-1 | E-1 | E-1 | E-1 | E-1 |
| | Thickness [um] | 1925 | 1925 | 1925 | 1925 | 1925 | 425 |
| Bending radius R without cracking [mm] | | 10 | 30 | 45 | 75 | 10 | 30 |
| Pencil hardness of cured film included in laminate | | 2H | 3H | 3H | 4H | H | 4H |
| Composite elastic modulus X [GPa] | | 5.60 | 4.26 | 4.29 | 4.29 | 4.57 | 4.26 |
| Hardness Y [GPa] | | 0.35 | 0.30 | 0.30 | 0.30 | 0.31 | 0.30 |
| Z value (=X+10Y) | | 9.10 | 7.25 | 7.30 | 7.30 | 7.62 | 7.25 |
| Adhesion of cured film (cross-cut method) | | 100/100 | 100/100 | 100/100 | 100/100 | 100/100 | 100/100 |

[Table 3]

| | | Example 11 | Example 12 | Example 13 | Example 14 | Example 15 | Example 16 | Example 17 |
|---|---|---|---|---|---|---|---|---|
| Cured film | Type | HC-A-1 | HC-A-1 | HC-A-1 | HC-A-1 | HC-A-1 | HC-A-1 | HC-A-1 |
| | Thickness [um] | 5 | 5 | 10 | 10 | 10 | 20 | 30 |
| Layer A | Type | CG-2 | MR-1 | CG-2 | MR-1 | MK-1 | MR-1 | MR-1 |
| | Thickness [um] | 500 | 75 | 500 | 75 | 75 | 75 | 75 |
| Layer B | Type | - | PC-1 | - | PC-1 | PC-2 | PC-1 | PC-1 |
| | Thickness [um] | - | 425 | - | 425 | 425 | 425 | 425 |
| Bending radius R without cracking [mm] | | 30 | 10 | 45 | 30 | - | 45 | 75 |
| Pencil hardness of cured film included in laminate | | 3H | 2H | 4H | 3H | 4H | 3H | 4H |
| Adhesion of cured film (cross-cut method) | | 100/100 | 100/100 | 100/100 | 100/100 | 100/100 | 100/100 | 100/100 |
| Breaking elongation of cured film [%] | | 112.9 | 115.2 | 111.0 | 111.1 | 123.0 | 110.3 | 103.1 |

26

[Table 4]

|  |  | Comparative Example 6 | Comparative Example 7 | Comparative Example 8 | Reference Example 2 | Reference Example 3 |
|---|---|---|---|---|---|---|
| Cured film | Type | HC-A-1 | HC-A-2 | HC-A-2 | HC-A-1 | HC-A-2 |
|  | Thickness [um] | 2.6 | 10 | 10 | 5 | 5 |
| Layer A | Type | MR-1 | CG-2 | MR-1 | PET-1 | PET-1 |
|  | Thickness [um] | 75 | 500 | 75 | 125 | 125 |
| Layer B | Type | PC-1 | - | PC-1 | - | - |
|  | Thickness [um] | 425 | - | 425 | - | - |
| Bending radius R without cracking [mm] |  | 10 | 120 | 120 | - | - |
| Pencil hardness of cured film included in laminate |  | H | 5H | 4H | F | H |
| Adhesion of cured film (cross-cut method) |  | 100/100 | 100/100 | 100/100 | 100/100 | 100/100 |
| Breaking elongation of cured film [%] |  | 118.7 | 101.8 | 102.6 | 120.0 | 115.0 |

[Table 5]

|  |  | Example 18 | Example 19 | Comparative Example 9 | Comparative Example 10 | Comparative Example 11 | Comparative Example 12 |
|---|---|---|---|---|---|---|---|
| Cured film | Type | HC-N-5 | HC-N-4 | HC-N-2 | HC-N-2 | HC-N-3 | HC-N-1 |
|  | Thickness [um] | 10 | 10 | 10 | 10 | 10 | 10 |
| Layer A | Type | MR-1 | MR-1 | CG-2 | MR-1 | MR-1 | MR-1 |
|  | Thickness [um] | 75 | 75 | 500 | 75 | 75 | 75 |
| Layer B | Type | PC-1 | PC-1 | - | PC-1 | PC-1 | PC-1 |
|  | Thickness [um] | 425 | 425 | - | 425 | 425 | 425 |
| Bending radius R without cracking [mm] |  | 75 | 30 | 30 | - | 30 | 120 |
| Pencil hardness of cured film included in laminate |  | 3H | 3H | H | H | H | 5H |
| Adhesion of cured film (cross-cut method) |  | 100/100 | 100/100 | 100/100 | 100/100 | 100/100 | 100/100 |
| Breaking elongation of cured film [%] |  | 105.5 | 108.1 | 111.6 | 112.4 | 110.9 | 100.1 |

[Table 6]

| | | Reference Example 4 | Reference Example 5 | Reference Example 6 | Reference Example 7 | Reference Example 8 | Reference Example 9 | Reference Example 10 | Reference Example 11 | Reference Example 12 |
|---|---|---|---|---|---|---|---|---|---|---|
| Cured film | Type | HC-N-2 | HC-N-5 | HC-N-4 | HC-N-3 | HC-N-1 | HC-N-6 | HC-N-6 | HC-A-4 | HC-A-4 |
| | Thickness [um] | 5 | 5 | 5 | 5 | 5 | 10 | 10 | 10 | 10 |
| Layer A | Type | PET-1 | PET-1 | PET-1 | PET-1 | PET-1 | MR-1 | MR-1 surface treatment | MR-1 | MR-1 surface treatment |
| | Thickness [um] | 125 | 125 | 125 | 125 | 125 | 75 | 75 | 75 | 75 |
| Layer B | Type | - | - | - | - | - | PC-1 | PC-1 | PC-1 | PC-1 |
| | Thickness [um] | - | - | - | - | - | 425 | 425 | 425 | 425 |
| Bending radius R without cracking [mm] | | - | - | - | - | - | - | - | 75 | 45 |
| Pencil hardness of cured film included in laminate | | HB | F | - | - | H | 4H | 4H | 3H | 3H |
| Adhesion of cured film (cross-cut method) | | 100/100 | 100/100 | 100/100 | 100/100 | 100/100 | 98/100 | 100/100 | 0/100 | 33/100 |
| Breaking elongation of cured film [%] | | 175.0 | 140.5 | 150.3 | 161.2 | 106.0 | 103.1 | 109.5 | 102.2 | 109.6 |

EP 3 978 241 B1

28

[Summary of Results]

In Examples 1 to 5 (Reference Examples), a cured film was formed, on a commercially available (meth)acrylic resin plate (CG-1) provided as a thermoplastic resin layer having a monolayer structure, using different materials or different methods.

The cured films included in the laminates obtained in these examples satisfied expressions (1) to (3) in composite elastic modulus X and hardness Y. The pencil hardness of the cured films included in the laminates obtained in these examples was in the range of 2H to 4H, and the laminates obtained in these examples had the bending radius R without cracking of 10 to 75 mm. In these examples, laminates having high surface hardness and good scratch resistance, and suppressed cracking of a cured film during thermoforming, and being suitable for a protective plate for thermoforming were obtained. The obtained laminates also had good adhesion of the cured film.

In Reference Example 1, a laminate was obtained in the same manner as in Example 5 (Reference Example) except that the surface of a commercially available (meth)acrylic resin plate (CG-1), provided as a thermoplastic resin layer having a monolayer structure, to have a cured film thereon was subjected to a corona discharge treatment. In Reference Example 1 where the surface of the thermoplastic resin layer to have a cured film thereon was subjected to a corona discharge treatment, the adhesion of the cured film could be increased than in Example 5 (Reference Example).

In Comparative Examples 1 and 2, laminates were obtained in the same manner as in Examples 1 to 5 (Reference Examples) except that the cured films were formed using different materials or different methods. The cured films included in the obtained laminates had the pencil hardness of H, and the surface hardness was insufficient.

In Comparative Examples 3 and 4, laminates were obtained in the same manner as in Examples 1 to 5 (Reference Examples) except that the cured films were formed using different materials or different methods, but the cured films included in the obtained laminates did not satisfy two or more of the expressions (1) to (3) in composite elastic modulus X and hardness Y. The pencil hardness of the cured films included in the obtained laminates was 5H, and the surface hardness was too high. Accordingly, the bending radius R without cracking was 120 mm in the obtained laminates, and the crack suppression effect during thermoforming was insufficient. The laminate obtained in Comparative Example 3 also had poor adhesion of the cured film.

In Examples 6 to 8 and Example 9 (Reference Example), a thermoplastic resin layer having a two-layer structure including a (meth)acrylic resin layer containing an SMA resin and a polyester resin layer was manufactured, and a cured film was formed on the (meth)acrylic resin layer of the thermoplastic resin layer. In these Examples, a laminate was obtained under the same conditions except that the thickness of the cured film was changed.

In Example 10 (Reference Example), a thermoplastic resin layer having a two-layer structure of a (meth)acrylic resin layer composed of a methacrylic resin (MK) having an rr ratio of 65% or more and a polyester resin layer was produced, and a cured film was formed on the (meth)acrylic resin layer of the thermoplastic resin layer. The cured films included in the laminates obtained in these examples satisfied expressions (1) to (3) in composite elastic modulus X and hardness Y. The pencil hardness of the cured films included in the laminates obtained in these examples was in the range of 2H to 4H, and the laminates obtained in these examples had the bending radius R without cracking of 10 to 75 mm. In these examples, laminates having high surface hardness and good scratch resistance, and suppressed cracking of a cured film during thermoforming, and being suitable for a protective plate for thermoforming were obtained. The obtained laminate also had good adhesion of the cured film.

In Comparative Example 5, a laminate was obtained in the same manner as in Examples 6 to 8 and Example 9 (Reference Example) except that the thickness of the cured film was changed. The cured film included in the obtained laminate had the pencil hardness of H, and the surface hardness was insufficient.

In Examples 11 and 13 (Reference Examples), a cured film of the same kind was formed with different thicknesses on a commercially available (meth)acrylic resin plate (CG-2) provided as a thermoplastic resin layer having a monolayer structure.

In Examples 14, and 16, 18 and 19 and Examples 12 and 17 (Reference Examples), a thermoplastic resin layer having a two-layer structure of a (meth)acrylic resin layer containing an SMA resin and a polycarbonate resin layer was produced, and a cured film was formed on the (meth)acrylic resin layer of the thermoplastic resin layer.

In Example 15 (Reference Example), a thermoplastic resin layer having a two-layer structure of a (meth)acrylic resin layer composed of a methacrylic resin (MK) having an rr ratio of 65% or more and a polycarbonate resin layer was produced, and a cured film was formed on the (meth)acrylic resin layer of the thermoplastic resin layer.

The pencil hardness of the cured films included in the laminates obtained in these examples was in the range of 2H to 4H, and the laminates obtained in these examples had the bending radius R without cracking of 10 to 75 mm. In these examples, laminates having high surface hardness and good scratch resistance, and suppressed cracking of a cured film during thermoforming, and being suitable for a protective plate for thermoforming were obtained. The breaking elongation of the cured film included in the laminate obtained in these examples was in the range of 103 to 123%. The obtained laminate also had good adhesion of the cured film.

In Comparative Example 6, a laminate was obtained in the same manner as in Example 12, except that the thickness of the cured film was changed. Due to the insufficient thickness, the cured film included in the obtained laminate had the pencil hardness of H, and the surface hardness was insufficient.

In Comparative Example 7, the laminate was obtained in the same manner as in Example 13 (Reference Example) except that a cured film was formed using a different material or a different method. The pencil hardness of the cured film included in the obtained laminate was 5H, thus the surface hardness was too high, and the breaking elongation of the cured film included in the obtained laminate was less than 103%. Accordingly, the obtained laminate had the bending radius R without cracking of 120 mm, and the crack suppression effect during thermoforming was insufficient.

In Comparative Example 8, the laminate was obtained in the same manner as in Example 14 except that a cured film was formed using a different material or a different method. The breaking elongation of the cured film included in the obtained laminate was less than 103%. Accordingly, the obtained laminate had the bending radius R without cracking of 120 mm, and the crack suppression effect during thermoforming was insufficient.

In Reference Example 2, a laminate was obtained in the same manner as in Example 11 (Reference Example), except that a polyethylene terephthalate resin plate film was used as the thermoplastic resin layer having a monolayer structure.

In Reference Example 3, a laminate was obtained in the same manner as in Comparative Example 7, except that a polyethylene terephthalate resin film was used as the thermoplastic resin layer having a monolayer structure, and the thickness of the cured film was changed.

The cured films included in the laminates obtained in these Reference Examples had the pencil hardness of F or H, and the surface hardness was insufficient.

In Comparative Example 9, the laminate was obtained in the same manner as in Example 13 (Reference Example) except that a cured film was formed using a different material or a different method.

In Comparative Examples 10 and 11, a laminate was obtained in the same manner as in Example 14, except that the cured film was formed using a different material or a different method.

The cured films included in the laminates obtained in these Comparative Examples had a pencil hardness of H, and the surface hardness was insufficient.

In Comparative Example 12, the laminate was obtained in the same manner as in Example 14 except that a cured film was formed using a different material or a different method.

The pencil hardness of the cured film included in the obtained laminate was 5H, thus the surface hardness was too high, and the breaking elongation of the cured film included in the obtained laminate was less than 103%. Accordingly, the bending radius R without cracking was 120 mm in the obtained laminate, and the crack suppression effect during thermoforming was insufficient.

In Reference Examples 4 to 8, a laminate was obtained in the same manner as in Reference Examples 2 and 3, except that a polyethylene terephthalate resin film was used as the thermoplastic resin layer having a monolayer structure, and a cured film was formed using a different material or a different method.

The cured films included in the laminates obtained in Reference Examples 4, 5, and 8 had the pencil hardness of HB, F, or H, and the surface hardness was insufficient. The breaking elongation of the cured films included in the laminates obtained in Reference Examples 4 to 7 was more than 123%.

In Reference Example 9, a laminate was obtained in the same manner as in Example 14, except that a cured film was formed using a different material or a different method.

In Reference Example 10, the laminate was obtained in the same manner as in Reference Example 9 except that the surface of the thermoplastic resin layer having a two-layer structure to have a cured film thereon was subjected to a corona discharge treatment. In Reference Example 10, the adhesion of the cured film could be increased over Reference Example 9.

In Reference Example 11, a laminate was obtained in the same manner as in Example 14, except that a cured film was formed using a different material or a different method. The cured film included in the obtained laminate had poor adhesion.

In Reference Example 12, the laminate was obtained in the same manner as in Reference Example 11 except that the surface of the thermoplastic resin layer having a two-layer structure to have a cured film thereon was subjected to a corona discharge treatment. In Reference Example 12, the adhesion of the cured film could be higher than that in Reference Example 11.

Reference Signs List

11 T-DIE
12 FIRST COOLING ROLL
13 SECOND COOLING ROLL

14 THIRD COOLING ROLL
15 TAKE-OFF ROLL
16, 16X, 16Y THERMOPLASTIC RESIN LAYER
17X, 17Y LAMINATE
21, 21A, 21B (METH)ACRYLIC RESIN-CONTAINING LAYER
31 POLYCARBONATE RESIN-CONTAINING LAYER
41, 41A, 41B CURED FILM

**Claims**

1. A laminate for thermoforming comprising:

    a thermoplastic resin layer having a monolayer structure or a laminated structure including a (meth)acrylic resin-containing layer; and
    a cured film laminated on the (meth)acrylic resin-containing layer of the thermoplastic resin layer,
    wherein the total thickness of the laminate is 75 $\mu$m to 5000 $\mu$m,
    wherein the (meth)acrylic resin-containing layer contains 5 to 80% by mass of a methacrylic resin and 95 to 20% by mass of a copolymer containing an aromatic vinyl compound unit and a maleic anhydride unit,
    wherein the cured film includes a cured product of a curable composition containing one or more curable (meth) acrylates selected from a group of polyfunctional (meth)acrylates and polyfunctional urethane (meth)acrylates,
    wherein the cured film has a thickness of 10 to 20 $\mu$m,

    has a pencil hardness of a surface of 2H to 4H, and has a composite elastic modulus and a hardness at 23°C satisfying expressions (1) to (3) below:

$$3.12 \leq X \leq 9.43 \cdots (1)$$

$$0.25 \leq Y \leq 0.56 \cdots (2)$$

$$5.61 \leq X + 10Y \leq 14.9 \cdots (3),$$

    wherein X represents the composite elastic modulus (GPa) at 23°C of the cured film, and Y represents the hardness (GPa) at 23°C of the cured film,

    wherein the pencil hardness is measured in accordance with JIS K5600-5-4 as disclosed in the description, and wherein the composite elastic modulus and the hardness are measured by the nanoindentation method in accordance with ISO14577 as disclosed in the description,
    wherein the smallest bending radius R is 10 to 75 mm, and
    wherein the smallest bending radius R is measured according to the method disclosed in the description.

2. The laminate according to claim 1, wherein the thermoplastic resin layer includes a polycarbonate resin-containing layer and a (meth)acrylic resin-containing layer.

3. The laminate according to claim 1 or 2, wherein a breaking elongation of the cured film is 103 to 123%, wherein the breaking elongation is measured in accordance with the method disclosed in the description.

4. The laminate according to any one of claims 1 to 3, wherein when adhesion of the cured film to the thermoplastic resin layer is tested in accordance with a cross-cut method of JIS-K5600-5-6, provided that the number of cut lines in each direction of a lattice pattern is 11 and a test compartment of 100 blocks is formed, no peeling is observed in 88 blocks or more of the test compartment of 100 blocks formed in the cured film.

5. The laminate according to any one of claims 1 to 4, wherein a thickness of the thermoplastic resin layer is 75 $\mu$m or more.

6. The laminate according to any one of claims 1 to 5, wherein the cured film includes a cured product of a photopolymerizable curable composition containing urethane (meth)acrylate.

7. The laminate according to any one of claims 1 to 6, wherein the laminate is a protective plate for display.

8. A method for producing the laminate according to any one of claims 1 to 7, comprising:

a step (S1) of providing the thermoplastic resin layer having a monolayer structure or a laminated structure including the (meth)acrylic resin-containing layer;
a step (S2-L) of applying a photopolymerizable curable composition on the (meth)acrylic resin-containing layer of the thermoplastic resin layer to form a coating film, and
a step (S3-L) of photocuring the coating film to form a cured film.

9. The method for producing the laminate according to claim 8, wherein, in the step (S1), the thermoplastic resin layer including a polycarbonate resin-containing layer and the (meth)acrylic resin-containing layer is coextruded.

## Patentansprüche

1. Laminat zum Thermoformen, umfassend:

eine thermoplastische Harzschicht mit einer Monoschichtstruktur oder einer laminierten Struktur, enthaltend eine (Meth)acrylharz-enthaltende Schicht; und
einen gehärteten Film laminiert auf der (Meth)acrylharz-enthaltenden Schicht der thermoplastischen Harzschicht,
wobei die Gesamtdicke des Laminats 75 $\mu$m bis 5000 $\mu$m beträgt,
wobei die (Meth)acrylharz-enthaltende Schicht 5 bis 80 Massen-% eines Methacrylharzes und 95 bis 20 Massen-% eines Copolymers, enthaltend eine aromatische Vinylverbindungseinheit und eine Maleinsäureanhydrideinheit, enthält,
wobei der gehärtete Film ein gehärtetes Produkt einer härtbaren Zusammensetzung, enthaltend ein oder mehrere härtbare (Meth)acrylate, ausgewählt aus einer Gruppe von polyfunktionellen (Meth)acrylaten und polyfunktionellen Urethan-(Meth)acrylaten, enthält,
wobei der gehärtete Film eine Dicke von 10 bis 20 $\mu$m aufweist,

eine Bleistifthärte einer Oberfläche von 2H bis 4H aufweist und einen zusammengesetzten Elastizitätsmodul und eine Härte bei 23°C aufweist, die die folgenden Ausdrücke (1) bis (3) erfüllen:

$$3{,}12 \leq X \leq 9{,}43 \cdots (1)$$

$$0{,}25 \leq Y \leq 0{,}56 \cdots (2)$$

$$5{,}61 \leq X + 10Y \leq 14{,}9 \cdots (3),$$

wobei X den zusammengesetzten Elastizitätsmodul (GPa) bei 23°C des gehärteten Films darstellt und Y die Härte (GPa) bei 23°C des gehärteten Films darstellt,

wobei die Bleistifthärte gemäß JIS K5600-5-4, wie in der Beschreibung offenbart, gemessen wird, und
wobei der zusammengesetzte Elastizitätsmodul und die Härte mittels des Nanoindentationsverfahrens gemäß ISO14577, wie in der Beschreibung offenbart, gemessen werden,
wobei der kleinste Biegeradius R 10 bis 75 mm beträgt und
wobei der kleinste Biegeradius R gemäß dem in der Beschreibung offenbarten Verfahren gemessen wird.

2. Laminat nach Anspruch 1, wobei die thermoplastische Harzschicht eine Polycarbonatharz-enthaltende Schicht und eine (Meth)acrylharz-enthaltende Schicht enthält.

3. Laminat nach Anspruch 1 oder 2, wobei eine Bruchdehnung des gehärteten Films 103 bis 123% beträgt, wobei die Bruchdehnung gemäß dem in der Beschreibung offenbarten Verfahren gemessen wird.

4. Laminat nach einem der Ansprüche 1 bis 3, wobei, wenn die Haftung des gehärteten Films an der thermoplastischen Harzschicht gemäß einem Kreuzschnittverfahren nach JIS-K5600-5-6 getestet wird, vorausgesetzt, dass die Anzahl der Schnittlinien in jeder Richtung einer Gitterstruktur 11 beträgt und ein Testabteil von 100 Blöcken gebildet wird, kein Ablösen in 88 Blöcken oder mehr des in dem gehärteten Film gebildeten Testabteils mit 100 Blöcken beobachtet wird.

5. Laminat nach einem der Ansprüche 1 bis 4, wobei eine Dicke der thermoplastischen Harzschicht 75 μm oder mehr beträgt.

6. Laminat nach einem der Ansprüche 1 bis 5, wobei der gehärtete Film ein gehärtetes Produkt einer photopolymerisierbaren härtbaren Zusammensetzung, enthaltend Urethan-(Meth)acrylat, enthält.

7. Laminat nach einem der Ansprüche 1 bis 6, wobei das Laminat eine Schutzplatte für ein Display ist.

8. Verfahren zur Herstellung des Laminats nach einem der Ansprüche 1 bis 7, umfassend:

einen Schritt (S1) des Bereitstellens der thermoplastischen Harzschicht mit einer Monoschichtstruktur oder einer laminierten Struktur, die die (Meth)acrylharz-enthaltende Schicht enthält,
einen Schritt (S2-L) des Auftragens einer photopolymerisierbaren härtbaren Zusammensetzung auf die (Meth) acrylharz-enthaltende Schicht der thermoplastischen Harzschicht zur Bildung eines Beschichtungsfilms, und
einen Schritt (S3-L) des Photohärtens des Beschichtungsfilms zur Bildung eines gehärteten Films.

9. Verfahren zur Herstellung des Laminats nach Anspruch 8, wobei in dem Schritt (S1) die thermoplastische Harzschicht, enthaltend eine Polycarbonatharz-enthaltende Schicht und die (Meth)acrylharz-enthaltende Schicht, coextrudiert wird.

**Revendications**

1. Stratifié pour thermoformage comprenant :

une couche de résine thermoplastique ayant une structure monocouche ou une structure stratifiée incluant une couche contenant de la résine (méth)acrylique ; et
un film durci stratifié sur la couche contenant de la résine (méth)acrylique de la couche de résine thermoplastique, dans lequel l'épaisseur totale du stratifié est de 75 μm à 5000 μm,
dans lequel la couche contenant de la résine (méth)acrylique contient 5 à 80 % en masse d'une résine méthacrylique et 95 à 20 % en masse d'un copolymère contenant une unité de composé de vinyle aromatique et une unité d'anhydride maléique,
dans lequel le film durci inclut un produit durci d'une composition durcissable contenant un ou plusieurs (méth) acrylates durcissables sélectionnés parmi un groupe de (méth)acrylates polyfonctionels et de (méth)acrylates d'uréthane polyfonctionnels,
dans lequel le film durci a une épaisseur de 10 à 20 μm, a une dureté au crayon d'une surface de 2H à 4H, et a un module élastique composite et une dureté à 23 °C satisfaisant les expressions (1) à (3) ci-dessous :

$$3{,}12 \leq X \leq 9{,}43 \qquad (1)$$

$$0{,}25 \leq Y \leq 0{,}56 \qquad (2)$$

$$5{,}61 \leq X + 10Y \leq 14{,}9 \qquad (3),$$

dans lesquelles X représente le module élastique composite (GPa) à 23 °C du film durci et Y représente la dureté (GPa) à 23 °C du film durci,
dans lequel la dureté au crayon est mesurée conformément à JIS K5600-5-4 tel que divulgué dans la description, et
dans lequel le module élastique composite et la dureté sont mesurés par le procédé de nanoindentation conformément à ISO14577 tel que divulgué dans la description,
dans lequel le rayon de courbure le plus petit R est de 10 à 75 mm, et

dans lequel le rayon de courbure le plus petit R est mesuré conformément au procédé divulgué dans la description.

2. Stratifié selon la revendication 1, dans lequel la couche de résine thermoplastique inclut une couche contenant de la résine de polycarbonate et une couche contenant de la résine (méth)acrylique.

3. Stratifié selon la revendication 1 ou 2, dans lequel un allongement à la rupture du film durci est de 103 à 123 %, dans lequel l'allongement à la rupture est mesuré conformément au procédé divulgué dans la description.

4. Stratifié selon l'une quelconque des revendications 1 à 3, dans lequel lorsque l'adhésion du film durci à la couche de résine thermoplastique est testée conformément à un procédé de quadrillage de JIS-K5600-5-6, à condition que le nombre de lignes découpées dans chaque direction d'un motif de treillis soit de 11 et un compartiment d'essai de 100 blocs soit formé, aucun pelage n'est observé dans 88 blocs ou plus du compartiment d'essai de 100 blocs formé dans le film durci.

5. Stratifié selon l'une quelconque des revendications 1 à 4, dans lequel une épaisseur de la couche de résine thermoplastique est de 75 $\mu$m ou plus.

6. Stratifié selon l'une quelconque des revendications 1 à 5, dans lequel le film durci inclut un produit durci d'une composition durcissable photopolymérisable contenant du (méth)acrylate d'uréthane.

7. Stratifié selon l'une quelconque des revendications 1 à 6, dans lequel le stratifié est une plaque protectrice pour affichage.

8. Procédé de production du stratifié selon l'une quelconque des revendications 1 à 7, comprenant :

une étape (S1) de fourniture de la couche de résine thermoplastique ayant une structure monocouche ou une structure stratifiée incluant la couche contenant de la résine (méth)acrylique ;
une étape (S2-L) d'application d'une composition durcissable photopolymérisable sur la couche contenant de la résine (méth)acrylique de la couche de résine thermoplastique pour former un film d'enrobage, et
une étape (S3-L) de photodurcissement du film d'enrobage pour former un film durci.

9. Procédé de production du stratifié selon la revendication 8, dans lequel, dans l'étape (S1), la couche de résine thermoplastique inclut une couche contenant de la résine de polycarbonate et la couche contenant de la résine (méth) acrylique est coextrudée.

17X

41
21
31
16X

Fig. 1

17Y

41B
21B
31
21A
42A
16Y

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6365583 B
- JP 6420924 B
- JP 6488242 B
- JP 4201365 B
- WO 2019049704 A1
- WO 2010013557 A